# EUROPÄISCHE PATENTSCHRIFT

(11) **EP 4 469 197 B1**
(45) Veröffentlichungstag und Bekanntmachung des Hinweises auf die Patenterteilung: **25.06.2025**
(21) Anmeldenummer: 23821129.6
(22) Anmeldetag: 21.11.2023
(51) Int. Cl.: B01J 8/00, B01J 8/04, B01J 8/20, B01J 19/10

(54) **VORRICHTUNG ZUM BEHANDELN, SPÜLVORRICHTUNG ZUM SPÜLEN UND TROCKNUNGSVORRICHTUNG ZUM TROCKNEN VON PARTIKELFÖRMIGEN FESTSTOFFEN SOWIE VERFAHREN ZUM BEHANDELN, SPÜLEN UND/ODER TROCKNEN VON DERARTIGEN FESTSTOFFEN**
DEVICE FOR TREATMENT, RINSING DEVICE FOR RINSING AND DRYING DEVICE FOR DRYING PARTICULATE SOLID MATERIALS, AND METHOD FOR TREATMENT, RINSING AND/OR DRYING OF SOLID MATERIALS OF THIS TYPE
DISPOSITIF DE TRAITEMENT, DISPOSITIF DE RINÇAGE POUR RINCER ET DISPOSITIF DE SÉCHAGE POUR SÉCHER DES MATIÈRES SOLIDES PARTICULAIRES ET PROCÉDÉ DE TRAITEMENT, DE RINÇAGE ET/OU DE SÉCHAGE DE TELLES MATIÈRES SOLIDES

(30) Priorität: 23.11.2022 DE 102022131061
(43) Veröffentlichungstag der Anmeldung: 04.12.2024
(73) Patentinhaber: Pace-Tec GmbH, 78120 Furtwangen (DE)
(72) Erfinder: SCHIENLE, Frank, 79111 Freiburg (DE); SAULE, Werner, 79279 Vörstetten (DE); WEHRLE, Stefan, 78120 Furtwangen (DE)
(74) Vertreter: Walther Bayer Faber Patentanwälte PartGmbB
(86) Internationale Anmeldenummer: PCT/EP2023/082579
(87) Internationale Veröffentlichungsnummer: WO 2024/110474

(56) Entgegenhaltungen:
- EP-A1- 0 880 562
- EP-A1- 1 464 384
- DE-A1- 10 126 665
- US-B2- 9 192 968

## Beschreibung

Die vorliegende Erfindung betrifft eine Vorrichtung zum Behandeln von partikelförmigen Feststoffen. Weiterhin betrifft die Erfindung eine Spülvorrichtung zum Spülen sowie eine Trocknungsvorrichtung zum Trocknen von derartigen Feststoffen. Darüber hinaus betrifft die Erfindung ein Verfahren zum Behandeln, Spülen und/oder Trocknen von solchen Feststoffen.

Im Rahmen der nachfolgenden Beschreibung könnte unter dem Begriff "partikelförmige Feststoffe" beispielsweise eine sortenreine Schüttung, bei welcher die Partikel zum größten Teil aus derselben Komponente bestehen, oder ein partikelförmiges Gemisch verstanden werden, bei welchem in einem Partikel mehrere Komponenten enthalten sind.

Eine Anwendung der vorliegenden Erfindung ist das Recycling oder Aufreinigen von chemisch trennbaren Stoffgemischen, die als partikelförmige Feststoffe vorliegen. Komponenten solcher partikelförmiger Feststoffe können Elementarhalbleiter wie Silizium oder Verbindungshalbleiter wie Galliumarsenid sein. Insbesondere beim Recycling liegen diese Komponenten häufig in Verbindung mit anderen Komponenten, beispielsweise mit Metallen vor, die typischerweise als Trägermaterial verwendet werden. In anderen Anwendungen dienen die Halbleiter als Trägermaterial für Metalle. Der entsprechende Trennungsprozess ist häufig relativ schwierig. In vielen Fällen fehlen Vorrichtungen und Verfahren, mit denen das Recycling und die Aufreinigung großtechnisch auf wirtschaftliche Weise durchführbar ist.

Informationen zum technischen Gebiet, auf welches sich die vorliegende Erfindung bezieht, können aus der DD 265 699 A1, der DD 281 353 A5, der DE 101 26 665 A1, US 9 192 968 B2, EP 0 880 562 A1, EP 1 464 384 A1 und der DE 60 2004 00C 055 T2 entnommen werden.

Aufgabe einer Ausführungsform der vorliegenden Erfindung ist es daher, eine Vorrichtung zum Behandeln, eine Spülvorrichtung zum Spülen und eine Trocknungsvorrichtung zum Trocknen von partikelförmigen Feststoffen vorzuschlagen, mit welchen es möglich ist, eine Abhilfe für die oben genannten Nachteile vorzuschlagen und mit welchen die genannten Prozesse mit derartigen partikelförmigen Feststoffen wirtschaftlich vertretbar und technisch beherrschbar durchgeführt werden können. Des Weiteren liegt einer Ausgestaltung der vorliegenden Erfindung die Aufgabe zugrunde, ein wirtschaftlich vertretbares und technisch beherrschbares Verfahren zum Behandeln, Spülen und/oder Trocknen von derartigen partikelförmigen Feststoffen zu schaffen.

Diese Aufgabe wird mit den in den Ansprüchen 1, 10, 14, 17, 18 und 23 angegebenen Merkmalen gelöst. Vorteilhafte Ausführungsformen sind Gegenstand der Unteransprüche.

Eine Ausführungsform der Erfindung betrifft eine Vorrichtung zum Behandeln von partikelförmigen Feststoffen, wobei die Vorrichtung umfasst:
- zumindest einen Reaktor, in welchen die partikelförmigen Feststoffe einbringbar sind, wobei der Reaktor
   o ein erstes Gitter und
   o ein zweites Gitter aufweist, welche einen Reaktionsraum begrenzen und das in den Reaktionsraum eingebrachten partikelförmigen Feststoffe im Reaktionsraum zurückhalten, und
- zumindest einen verschließbaren oder verschlossenen Aufnahmeraum, in welchen der Reaktor einbringbar ist,
- eine Zufuhrleitung zum Zuführen eines Prozessfluids in den Aufnahmeraum,
- zumindest eine Fördereinheit zum Fördern des Prozessfluids sowie eines Reaktionsgemisches aus dem Prozessfluid und den partikelförmigen Feststoffen durch den Aufnahmeraum, wobei der Aufnahmeraum derart ausgestaltet ist, dass das Prozessfluid sowie das Reaktionsgemisch bei aktivierter Fördereinheit das erste Gitter, den Reaktionsraum und das zweite Gitter durchströmen, wenn der Reaktor in den Aufnahmeraum eingebracht ist.

Im Rahmen der vorliegenden Beschreibung könnte unter einem Reaktionsgemisch ein Gemisch verstanden werden, welches während oder nach der Einwirkung des Prozessfluids auf die partikelförmigen Feststoffe entsteht. Das Prozessfluid könnte dabei insbesondere eine Lauge, eine Säure und/oder Wasser sein oder diese Substanzen umfassen. Dabei soll an dieser Stelle betont werden, dass die vorliegende Erfindung auch auf andere Reaktionsgemische anwendbar sein könnte.

Ein wesentlicher Punkt der vorschlagsgemäßen Vorrichtung ist, dass die Reaktion in einem transportablen Reaktor stattfindet. Die partikelförmigen Feststoffe, können an einem beliebigen Ort in den Reaktor eingebracht werden. Der Reaktor kann anschließend zur Vorrichtung transportiert und dort in den Aufnahmeraum eingebracht werden. Anschließend werden die partikelförmigen Feststoffe mit dem Prozessfluid behandelt, wobei der Reaktor derart im Aufnahmeraum angeordnet ist, dass der Reaktor vom Prozessfluid und/oder vom Reaktionsgemisch zwangsdurchströmt wird. Hierdurch wird je nach Prozessführung eine Art Wirbelbett erzeugt, wodurch der Stofftransport zwischen den partikelförmigen Feststoffen und dem Prozessfluid begünstigt wird. Aufgrund der Einwirkung des Prozessfluids auf die partikelförmigen Feststoffe werden beispielsweise Metalle zumindest teilweise vom Trägermaterial getrennt und geht zumindest kurzfristig in Lösung, während das Trägermaterial im festen Zustand verbleibt. Hierdurch kann eine weitgehende Trennung des Metalls vom Trägermaterial erreicht werden, ohne dass ein erhöhter Energieaufwand notwendig ist. Insbesondere ist ein Umfüllen der partikelförmigen Feststoffe während der Behandlung nicht notwendig.

Nach Maßgabe einer weiteren Ausführungsform kann der Aufnahmeraum einen Aufnahmeabschnitt umfassen, in welchen der Reaktor unter Ausbildung eines zumindest in radialer Richtung geschlossenen Zwischenraums zwischen dem Reaktor und dem Aufnahmeabschnitt einbringbar ist. Das Vorsehen eines Aufnahmeabschnitts ermöglicht es, den Reaktor innerhalb des Aufnahmeabschnitts so zu positionieren, dass nahezu das gesamte Prozessfluid und das gesamte Wasser den Reaktor durchströmen müssen. Mit anderen Worten wird aufgrund des Vorsehens des Aufnahmeabschnitts der Reaktor in den Strömungsweg des Prozessfluids und/oder des Reaktionsgemischs durch den Aufnahmeraum integriert. Insofern wird das Prozessfluid sehr effektiv zum Behandeln der partikelförmigen Feststoffe genutzt. Um dabei jedoch eine geführte Durchströmung und folglich eine weitgehende Beaufschlagung der partikelförmigen Feststoffe mit dem Reaktionsgemisch oder mit dem Prozessfluid erreichen zu können, können eine oder mehrere Dichtungen vorgesehen sein, welche den Zwischenraum gegenüber dem Reaktor und dem Aufnahmeabschnitt abdichten. Folglich kann sich keine kontinuierliche Strömung des Reaktionsgemischs oder des Prozessfluids durch den Zwischenraum vorbei am Reaktor ausbilden. Das mit einer solchen Strömung am Reaktor vorbeigeführte Prozessfluid oder Reaktionsgemisch würde nicht mit den partikelförmigen Feststoffen in Kontakt treten und könnte nicht an der Reaktion teilnehmen. Insbesondere infolge des Vorsehens der Dichtung kann das Prozessfluid oder das Reaktionsgemisch effektiv genutzt werden.

In einer weitergebildeten Ausführungsform kann im Aufnahmeraum ein Vorlagebehälter zum Vorhalten des Prozessfluids angeordnet sein. Der Vorlagebehälter sorgt dafür, dass ein zusätzliches Volumen geschaffen wird, wo das Prozessfluid sowie das Reaktionsgemisch vorgehalten werden können. Insbesondere ist es möglich, das Verhältnis zwischen Wasser und dem Prozessfluid zu verändern. Darüber hinaus kann das Volumen genutzt werden, um das Reaktionsgemisch während der Entnahme oder des Einbringens des Reaktors aus dem bzw. in den Aufnahmeraum im Vorlagebehälter zu sammeln. Es kann dort eine gewisse Verweilzeit eingestellt werden, um beispielsweise die Temperatur des Reaktionsgemischs zu ändern, wodurch Fällungsprozesse ausgelöst und gesteuert werden können. Hierdurch können beispielsweise das gelöste Metall und/oder andere Bestandteile wie Wertstoffe, beispielsweise Edelmetalle, aus dem Reaktionsgemisch getrennt werden.

Bei einer weitergebildeten Ausführungsform kann im Aufnahmeraum zumindest eine Filtereinheit zum Filtern des Reaktionsgemischs angeordnet sein. Das Reaktionsgemisch muss beim Durchströmen des Aufnahmeraums die Filtereinheit durchströmen. Beispielsweise beim eingangs erwähnten Recycling kann nicht nur ein Gemisch des Trägermaterials und Metall vorliegen, sondern es können auch andere Stoffe in diesem Gemisch vorhanden sein, welche mit der Filtereinheit aus dem Reaktionsgemisch entfernt werden können, beispielsweise dann, wenn im Vorlagebehälter ein Fällungs- oder Kristallisationsprozess durchgeführt wird.

Der Reinheitsgrad des Trägermaterials und des Metalls nach Abschluss des Recyclingprozesses wird hierdurch erhöht.

Bei einer weiteren Ausführungsform kann die Filtereinheit
- zumindest einen im Reaktor angeordneten Siebeinsatz mit einer Maschenweite von 0,5 mm bis 5 mm und insbesondere von 1 mm bis 2 mm, und/oder
- zumindest einen im Vorlagebehälter angeordneten Vorfilter mit einer Porengröße von 50 µm bis 500 µm und insbesondere von 80 µm und 120 µm und/oder
- zumindest einen zwischen dem Vorlagebehälter und dem Reaktor angeordneten Feinfilter mit einer Porengröße von 1 µm bis 50 µm und insbesondere von 15 µm bis 25 µm umfassen.

Die Anordnung des Siebeinsatzes, des Vorfilters und des Feinfilters folgt dabei der Strömungsrichtung des Reaktionsgemisches innerhalb des Aufnahmeraums. Wie eingangs erwähnt, werden die partikelförmigen Feststoffe vom ersten Gitter und vom zweiten Gitter im Reaktionsraum gehalten. Nach der Einwirkung des Prozessfluids auf die partikelförmigen Feststoffe kommt es üblicherweise zu einer Verkleinerung der durchschnittlichen Partikelgröße, was dazu führen kann, dass ein größerer Teil des Gemischs das erste Gitter und das zweite Gitter durchqueren kann, obwohl der durchgeführte Prozess noch nicht vollständig durchgeführt worden ist. Der Siebeinsatz verhindert, dass solche relativ großen Partikel den Reaktionsraum verlassen können, so dass sie weiter im Reaktor behandelt werden können und die gewünschte Verweilzeit erreicht werden kann. Mit dem Vorfilter können im Vorlagebehälter gefällte Stoffe wie Metallhydroxid oder ausgeschwemmte Partikel wie das Trägermaterial oder weitere anfallende Komponenten aufgefangen und aus dem Reaktionsgemisch entfernt werden. Selbiges gilt für den Feinfilter, der stromabwärts vom Vorfilter angeordnet ist. Der Feinfilter kann dabei im Bereich angeordnet sein, in welche eine Rohrleitung vom Vorlagebehälter in den Aufnahmeabschnitt übergeht. Dann können auch feine Partikel gefiltert werden, welche sich in dieser Rohrleitung gebildet haben oder welche so klein sind, dass sie den Vorfilter durchqueren konnten.

Eine weitergebildete Ausführungsform kann sich dadurch auszeichnen, dass die Vorrichtung zumindest eine Kühlmittelleitung zum Zuführen eines Kühlmittels in den Aufnahmeraum umfasst. Als Kühlmittel kann insbesondere Wasser verwendet werden. Die Reaktion zwischen den partikelförmigen Feststoffen und dem Prozessfluid kann stark exotherm sein, so dass innerhalb von sehr kurzer Zeit sehr hohe Temperaturen entstehen können und die Reaktion kaum mehr kontrollierbar ist. Der Verlauf dieser Reaktion kann insbesondere aus folgendem Grund nur sehr schwer vorher gesehen werden: Die zum Recycling vorgesehenen Materialien werden üblicherweise in geschreddertem Zustand angeliefert, infolgedessen das Gemisch partikelförmig vorliegt. Allerdings ist die Partikelgrößenverteilung der partikelförmigen Feststoffe sehr unterschiedlich, so dass die Partikel von Charge zu Charge sehr unterschiedliche spezifische Oberflächen aufweisen können. Wenn die gerade zu behandelnden partikelförmigen Feststoffe eine vergleichsweise große spezifische Oberfläche aufweisen, ist der entsprechende Stofftransport zwischen dem Prozessfluid und den partikelförmigen Feststoffen besonders intensiv, so dass die Reaktion sehr heftig verlaufen und nicht mehr kontrollierbar sein kann. In diesem Fall kann mit dem Kühlmittel die Reaktion verlangsamt und insbesondere gestoppt werden, so dass das Entstehen von sehr hohen Temperaturen, welche beispielsweise den Reaktor beschädigen könnten, verhindert werden kann. Das Zuführen eines Kühlmittels zum Verlangsamen oder zum Stoppen einer chemischen Reaktion wird auch als "Quenchen" bezeichnet.

Nach Maßgabe einer weiteren Ausführungsform kann die Vorrichtung eine Ultraschalleinrichtung zum Einkoppeln von Ultraschall in den Reaktionsraum aufweisen. Für die Abtrennung einiger Materialien vom Trägermaterial kann es nötig oder zumindest vorteilhaft sein, Ultraschall in das Prozessfluid einzukoppeln, wodurch das Trennergebnis und insbesondere der Reinheitsgrad, der am Ende des Recyclingprozesses erreicht wird, erhöht werden kann.

Bei einer weiteren Ausführungsform kann es sich anbieten, dass die Ultraschalleinrichtung eine Anzahl von Ultraschall-schwingern aufweist, welche am Aufnahmeabschnitt angeordnet sind. Die Anordnung von Ultraschallschwingern am Aufnahmeabschnitt ermöglicht es, den Ultraschall möglichst direkt und ohne größere Verluste in den Reaktionsraum einzukoppeln.

Nach Maßgabe einer weiteren Ausführungsform kann der Reaktor eine der Anzahl der Ultraschallschwingern entsprechende Anzahl von Durchbrüchen aufweisen, welche so angeordnet sind, dass sie mit den Ultraschallschwingern fluchten, wenn der Reaktor in den Aufnahmeabschnitt eingebracht ist. In dieser Ausführungsform kann der Ultraschall in den Reaktionsraum eindringen, ohne dass die Wandung des Reaktors eine Dämpfung des Ultraschalls bewirkt. Wie erwähnt, kann der Aufnahmeraum einen Aufnahmeabschnitt aufweisen, in welchen der Reaktor unter Ausbildung eines in radialer Richtung geschlossenen Zwischenraums zwischen dem Reaktor und dem Aufnahmeabschnitt einbringbar ist. Dabei kann das Volumen dieses Zwischenraums gering gehalten werden. Zwar kann ein gewisser Anteil des Reaktionsgemischs durch die Durchbrüche in diesen Zwischenraum gelangen, weil aber dieser Anteil sehr gering ist, kann dies akzeptiert werden. Zudem begünstigt die Anwesenheit des Reaktionsgemisches im Zwischenraum die Weiterleitung des Ultraschalls in den Reaktionsraum, da keine den Ultraschall dämpfende Luftschicht vorhanden ist. Um dabei jedoch eine geführte Durchströmung und folglich eine weitgehende Beaufschlagung der partikelförmigen Feststoffe mit dem Reaktionsgemisch oder mit dem Prozessfluid erreichen zu können, können eine oder mehrere Dichtungen vorgesehen sein, welche den Zwischenraum gegenüber dem Reaktor und dem Aufnahmeabschnitt abdichten. Folglich kann sich keine kontinuierliche Strömung des Reaktionsgemischs oder des Prozessfluids durch den Zwischenraum vorbei am Reaktor ausbilden. Das mit einer solchen Strömung am Reaktor vorbeigeführte Prozessfluid oder Reaktionsgemisch würde nicht mit den partikelförmigen Feststoffen in Kontakt treten und könnte nicht an der Reaktion teilnehmen. Insbesondere infolge des Vorsehens der Dichtung kann das Prozessfluid oder das Reaktionsgemisch effektiv genutzt werden.

Eine Ausbildung der Erfindung betrifft eine Spülvorrichtung zum Spülen von partikelförmigen Feststoffen, wobei die Spülvorrichtung umfasst:
- zumindest einen Reaktor, in welchen die partikelförmigen Feststoffe einbringbar sind, wobei der Reaktor
   o ein erstes Gitter und
   o ein zweites Gitter aufweist, welche einen Reaktionsraum begrenzen und die in den Reaktionsraum eingebrachten partikelförmigen Feststoffe im Reaktionsraum zurückhalten, und
- zumindest einen verschließbaren oder verschlossenen Aufnahmeraum, in welchen der Reaktor einbringbar ist,
- eine Spülfluid-Zufuhrleitung zum Zuführen eines Spülfluids in den Aufnahmeraum,
- zumindest eine Spülfluid-Fördereinheit zum Fördern des Spülfluids durch den Aufnahmeraum, wobei der Aufnahmeraum derart ausgestaltet ist, dass das Spülfluid bei aktivierter Spülfluid-Fördereinheit das erste Gitter, den Reaktionsraum und das zweite Gitter durchströmt, wenn der Reaktor in den Aufnahmeraum eingebracht ist.

Es soll an dieser Stelle erwähnt werden, dass die Spülvorrichtung sowohl zum Spülen der partikelförmigen Feststoffe als auch zum Spülen des Reaktionsgemisches verwendet werden kann. Im ersten Fall dient die Spülung dazu, die partikelförmigen Feststoffe von Verschmutzungen zu befreien, welche beispielsweise beim Schreddern des Ausgangsmaterials entstanden sind, bevor die partikelförmigen Feststoffe mit dem Prozessfluid behandelt werden. Im zweiten Fall dient die Spülung dazu, Reste des eingesetzten Prozessfluids von den partikelförmigen Feststoffen zu entfernen, beispielsweise, um die partikelförmigen Feststoffe anschließend einer Behandlung mit einem anderen Prozessfluid zuzuführen.

Der wesentliche Aufbau der Spülvorrichtung gleicht dabei dem Aufbau der Vorrichtung, mit welchem die partikelförmigen Feststoffe behandelt werden. Insbesondere wird auch in diesem Fall beim Durchströmen des Spülfluids durch den Reaktor eine Art Wirbelbett erzeugt, wodurch das Spülen besonders effektiv und gründlich durchgeführt werden kann.

Bei einer weiteren Ausbildung kann vorgesehen sein, dass der Aufnahmeraum einen Aufnahmeabschnitt umfasst, in welchen der Reaktor unter Ausbildung eines zumindest in radialer Richtung geschlossenen Zwischenraums zwischen dem Reaktor und dem Aufnahmeabschnitt einbringbar ist. Das Vorsehen eines Aufnahmeabschnitts ermöglicht es, den Reaktor innerhalb des Aufnahmeabschnitts so zu positionieren, dass nahezu das gesamte Spülfluid den Reaktor durchströmen muss. Mit anderen Worten wird aufgrund des Vorsehens des Aufnahmeabschnitts der Reaktor in den Strömungsweg des Spülfluids durch den Aufnahmeraum integriert. Insofern wird das Spülfluid sehr effektiv zum Spülen der partikelförmigen Feststoffe genutzt. Um dabei jedoch eine geführte Durchströmung und folglich eine weitgehende Beaufschlagung der partikelförmigen Feststoffe mit dem Reaktionsgemisch oder mit dem Prozessfluid erreichen zu können, können eine oder mehrere Dichtungen vorgesehen sein, welche den Zwischenraum gegenüber dem Reaktor und dem Aufnahmeabschnitt abdichten. Folglich kann sich keine kontinuierliche Strömung des Reaktionsgemischs oder des Prozessfluids durch den Zwischenraum vorbei am Reaktor ausbilden. Das mit einer solchen Strömung am Reaktor vorbeigeführte Prozessfluid oder Reaktionsgemisch würde nicht mit den partikelförmigen Feststoffen in Kontakt treten und könnte nicht an der Reaktion teilnehmen. Insbesondere infolge des Vorsehens der Dichtung kann das Prozessfluid oder das Reaktionsgemisch effektiv genutzt werden.

Eine fortentwickelte Ausbildung kann vorgeben, dass im Aufnahmeraum ein Spülfluid-Vorlagebehälter zum Vorhalten des Spülfluids angeordnet ist. Im Spülfluid-Vorlagebehälter kann beispielsweise das Spülfluid auf eine bestimmte Temperatur erwärmt werden, sofern dies gewünscht ist. Weiterhin kann bereits verwendetes Spülfluid, sofern dies noch nicht übermäßig verschmutzt ist, zwischengelagert werden, während der Reaktor aus dem Aufnahmeabschnitt entnommen und ein anderer Reaktor mit einer anderen Charge der zu spülenden partikelförmigen Feststoffe in diesen eingesetzt wird. Das Spülfluid kann dann erneut verwendet werden.

Nach Maßgabe einer fortentwickelten Ausbildung kann die Vorrichtung zumindest eine Spülfluid-Abführleitung zum Abführen des Spülfluids aus dem Aufnahmeraum aufweisen. Wenn das Spülfluid so stark verschmutzt ist, dass es nicht mehr verwendet werden kann, kann es über die Spülfluid-Abführleitung aus der Spülvorrichtung abgeführt werden.

Eine Ausgestaltung der Erfindung betrifft eine Trocknungsvorrichtung zum Trocknen von partikelförmigen Feststoffen, wobei die Trocknungsvorrichtung umfasst:
- zumindest einen Reaktor, in welchen die partikelförmigen Feststoffe einbringbar sind, wobei der Reaktor
   o ein erstes Gitter und
   o ein zweites Gitter aufweist, welche einen Reaktionsraum begrenzen und die in den Reaktionsraum eingebrachten partikelförmigen Feststoffe im Reaktionsraum zurückhalten, und
- zumindest einen verschließbaren oder verschlossenen Aufnahmeraum, in welchen der Reaktor einbringbar ist,
- zumindest eine Ansaugeinheit zum Fördern eines Trocknungsfluids durch den Aufnahmeraum, wobei der Aufnahmeraum derart ausgestaltet ist, dass das Trocknungsfluid bei aktivierter Ansaugeinheit das erste Gitter, den Reaktionsraum und das zweite Gitter durchströmt, wenn der Reaktor in den Aufnahmeraum eingebracht ist.

Die Trocknungsvorrichtung dient insbesondere dafür, die partikelförmigen Feststoffe zu trocknen. Wie erwähnt, werden die partikelförmigen Feststoffe mit dem üblicherweise flüssigen Prozessfluid behandelt, so dass die partikelförmigen Feststoffe nach der Behandlung feucht sind. Für das anschließende Lagern und für den anschließenden Transport ist es jedoch in vielerlei Hinsicht wünschenswert, wenn die partikelförmigen Feststoffe getrocknet sind, was mit der Trocknungsvorrichtung umgesetzt werden kann. Insbesondere wird auch in diesem Fall beim Durchströmen des Trocknungsfluids durch den Reaktor eine Art Wirbelbett erzeugt, wodurch das Trocknen besonders effektiv und gründlich durchgeführt werden kann. Als Trocknungsfluid bietet sich die Verwendung von erwärmter Luft an, die beispielsweise mittels der als ein Seitenkanalkompressor ausgebildeten Ansaugeinheit aus der Umgebung der Trocknungsvorrichtung angesaugt und erwärmt werden kann.

In einer weitergebildeten Ausgestaltung kann der Aufnahmeraum einen Aufnahmeabschnitt umfassen, in welchen der Reaktor unter Ausbildung eines zumindest in radialer Richtung geschlossenen Zwischenraums zwischen dem Reaktor und dem Aufnahmeabschnitt einbringbar ist. Das Vorsehen eines Aufnahmeabschnitts ermöglicht es, den Reaktor innerhalb des Aufnahmeabschnitts so zu positionieren, dass nahezu das gesamte Trocknungsfluid den Reaktor durchströmen müssen. Mit anderen Worten wird aufgrund des Vorsehens des Aufnahmeabschnitts der Reaktor in den Strömungsweg des Trocknungsfluids durch den Aufnahmeraum integriert. Insofern wird das Trocknungsfluid sehr effektiv zum Trocknen der partikelförmigen Feststoffe genutzt. Um dabei jedoch eine geführte Durchströmung und folglich eine weitgehende Beaufschlagung der partikelförmigen Feststoffe mit dem Reaktionsgemisch oder mit dem Prozessfluid erreichen zu können, können eine oder mehrere Dichtungen vorgesehen sein, welche den Zwischenraum gegenüber dem Reaktor und dem Aufnahmeabschnitt abdichten. Folglich kann sich keine kontinuierliche Strömung des Reaktionsgemischs oder des Prozessfluids durch den Zwischenraum vorbei am Reaktor ausbilden. Das mit einer solchen Strömung am Reaktor vorbeigeführte Prozessfluid oder Reaktionsgemisch würde nicht mit den partikelförmigen Feststoffen in Kontakt treten und könnte nicht an der Reaktion teilnehmen.

Insbesondere infolge des Vorsehens der Dichtung kann das Prozessfluid oder das Reaktionsgemisch effektiv genutzt werden.

Eine Umsetzung der Erfindung betrifft ein System zum Behandeln von partikelförmigen Feststoffen, umfassend
- eine erste Vorrichtung zum Behandeln von partikelförmigen Feststoffen nach einer der zuvor genannten Ausführungsformen,
- eine zweite Vorrichtung zum Behandeln von partikelförmigen Feststoffen nach einer der zuvor genannten Ausführungsformen,
- eine erste Spülvorrichtung zum Spülen der partikelförmigen Feststoffe nach einer der zuvor erörterten Ausbildungen,
- eine dritte Vorrichtung zum Behandeln von partikelförmigen Feststoffen nach einer der zuvor genannten Ausführungsformen,
- eine zweite Spülvorrichtung zum Spülen der partikelförmigen Feststoffe nach einer der zuvor erörterten Ausbildungen,
- eine Trocknungsvorrichtung zum Trocknen der partikelförmigen Feststoffe nach einer der zuvor beschriebenen Ausgestaltungen, sowie
- einer Transporteinrichtung zum Transportieren des Reaktors innerhalb des Systems.

In diesem System können die partikelförmigen Feststoffe auf unterschiedliche Weise behandelt werden. Das System gemäß dieser Umsetzung umfasst dabei insgesamt sechs Stationen, wobei die partikelförmigen Feststoffe mittels einer Transporteinrichtung von einer Station zur nächsten transportiert werden. Dabei verbleiben die partikelförmigen Feststoffe immer im Reaktor, so dass dieser auch die Funktion eines Carriers bezüglich der partikelförmigen Feststoffe aufweist. Ein Umfüllen der partikelförmigen Feststoffe ist nicht notwendig, wodurch die Behandlung vereinfacht und beschleunigt wird. Das Vorsehen von insgesamt sechs Stationen hat sich dabei für eine Vielzahl von Behandlungsprozessen für partikelförmige Feststoffe als optimal herausgestellt, insbesondere dann, wenn die Reaktionen stark exotherm verlaufen können. Dabei sind insgesamt drei Vorrichtungen zum Behandeln der partikelförmigen Feststoffe, zwei Spülvorrichtung zum Spülen der partikelförmigen Feststoffe sowie eine Trocknungsvorrichtung zum Trocknen der partikelförmigen Feststoffe vorgesehen.

Eine Implementierung der vorliegenden Erfindung betrifft ein Verfahren zum Behandeln von partikelförmigen Feststoffen mit einer Vorrichtung nach er der zuvor erläuterten Ausführungsformen umfassend folgende Schritte:
- Einbringen der zu behandelnden partikelförmigen Feststoffe in den Reaktionsraum,
- Einbringen des Reaktors in den Aufnahmeraum,
- Zuführen eines Prozessfluids in den Aufnahmeraum, und
- Fördern des Prozessfluids sowie eines Reaktionsgemisches aus dem Prozessfluid und den partikelförmigen Feststoffen durch den Aufnahmeraum derart, dass das Prozessfluid sowie das Reaktionsgemisch bei aktivierter Fördereinheit das erste Gitter, den Reaktionsraum und das zweite Gitter durchströmen.

Die technischen Effekte und Vorteile, die sich mit dem vorschlagsgemäßen Verfahren erreichen lassen, entsprechen denjenigen, die für die entsprechend ausgestaltete Vorrichtung zum Behandeln von partikelförmigen Feststoffen erörtert worden sind. Zusammenfassend sei darauf hingewiesen, dass beim Durchströmen des Reaktors eine Art Wirbelbett erzeugt wird, wodurch die Behandlung der partikelförmigen Feststoffe besonders effektiv und gründlich durchgeführt werden kann.

Bei einer weiteren Implementierung kann das Verfahren folgende Schritte umfassen:
- Bestimmen der Temperatur des Reaktionsgemisches im Aufnahmeraum mittels einer Temperaturbestimmungseinheit, und
- Zuführen eines Kühlmittels in den Aufnahmeraum mittels der Kühlmittelleitung, wenn die bestimmte Temperatur einen Grenzwert überschreitet.

Als Kühlmittel kann insbesondere Wasser verwendet werden. Wie erwähnt, kann die Reaktion zwischen den partikelförmigen Feststoffen und dem Prozessfluid stark exotherm sein, so dass innerhalb von sehr kurzer Zeit sehr hohe Temperaturen entstehen können und die Reaktion nicht mehr kontrollierbar sein kann. Man kann aber anhand des Temperaturverlaufs bereits abschätzen, ob die Reaktion in kontrollierten Bahnen verläuft oder nicht. Sollte der Temperaturverlauf darauf hindeuten, dass die Reaktion nicht mehr kontrollierbar werden könnte, kann rechtzeitig das Kühlmittel zugeführt und die Reaktion verzögert oder gestoppt werden. Beschädigungen am Reaktor können hierdurch vermieden werden.

Eine weitergebildete Implementierung des Verfahrens kann sich durch folgenden Schritt auszeichnen:
- Einkoppeln von Ultraschall in den Reaktionsraum mittels der Ultraschalleinrichtung.

Für die Abtrennung einiger Materialien vom Trägermaterial kann es nötig sein, Ultraschall in das Prozessfluid einzukoppeln. , wodurch das Trennergebnis und insbesondere der Reinheitsgrad, der am Ende des Recyclingprozesses erreicht wird, erhöht werden kann.

Nach Maßgabe einer weiteren Implementierung kann das Verfahren folgende Schritte aufweisen:
- Zuführen eines Spülfluids in den Aufnahmeraum mittels einer Spülfluid-Förderleitung, und
- Fördern des Spülfluids durch den Aufnahmeraum mittels einer Spülfluid-Fördereinheit derart, dass das Spülfluid bei aktivierter Spülfluid-Fördereinheit das erste Gitter, den Reaktionsraum und das zweite Gitter durchströmt.

Wie erwähnt, kann die Spülvorrichtung sowohl zum Spülen der partikelförmigen Feststoffe als auch zum Spülen des Reaktionsgemisches verwendet werden. Insbesondere wird auch in diesem Fall beim Durchströmen des Spülfluids durch den Reaktor eine Art Wirbelbett erzeugt, wodurch das Spülen besonders effektiv und gründlich durchgeführt werden kann.

Bei einer weiteren Implementierung kann es sich anbieten, dass das Verfahren folgende Schritte aufweist:
- Fördern eines Trocknungsfluids durch den Aufnahmeraum mittels einer Ansaugeinheit, wobei der Aufnahmeraum derart ausgestaltet ist, dass das Trocknungsfluid bei aktivierter Ansaugeinheit das erste Gitter, den Reaktionsraum und das zweite Gitter durchströmt.

Wie erwähnt, werden die partikelförmigen Feststoffe häufig mit einem flüssigen Prozessfluid behandelt, so dass die partikelförmigen Feststoffe nach der Behandlung feucht sind. Für das anschließende Lagern und für den anschließenden Transport ist es jedoch in vielerlei Hinsicht wünschenswert, wenn die partikelförmigen Feststoffe getrocknet sind, was mit der Trocknungsvorrichtung umgesetzt werden kann. Insbesondere wird auch in diesem Fall beim Durchströmen des Trocknungsfluids durch den Reaktor eine Art Wirbelbett erzeugt, wodurch das Trocknen besonders effektiv und gründlich durchgeführt werden kann. Als Trocknungsfluid bietet sich die Verwendung von erwärmter Luft an, die beispielsweise mittels der als ein Seitenkanalkompressor ausgebildeten Ansaugeinheit aus der Umgebung der Trocknungsvorrichtung angesaugt und erwärmt werden kann.

Bei einer weitergebildeten Implementierung kann im bestimmungsgemäßen Gebrauch der Vorrichtung das erste Gitter unterhalb des zweiten Gitters angeordnet sein und das Trocknungsfluid den Reaktionsraum vom zweiten Gitter zum ersten Gitter hin durchströmen. In dieser Ausgestaltung durchströmt das Trocknungsfluid den Reaktor entlang der Wirkrichtung der Schwerkraft. Die Energie, die für das Durchströmen aufgebracht werden muss, ist dabei deutlich geringer als für den Fall, dass das Trocknungsfluid entgegen der Wirkrichtung der Schwerkraft den Reaktor durchströmen würde. Zudem werden die partikelförmigen Feststoffe in dieser Ausgestaltung gleichmäßiger durchströmt als dann, wenn die partikelförmigen Feststoffe entgegen der Wirkrichtung durchströmt werden. Wenn die partikelförmigen Feststoffe entgegen der Wirkrichtung durchströmt werden, kann es zur Ausbildung von Strömungskanälen kommen, durch welche das Trocknungsfluid verstärkt strömt, während andere Bereiche der partikelförmigen Feststoffe nicht oder weniger stark durchströmt werden.

Eine Realisierung der Erfindung betrifft ein Verfahren zum Behandeln von partikelförmigen Feststoffen mit einem System nach der zuvor beschriebenen Realisierung, umfassend die folgenden Schritte:
- Einbringen des Reaktors in den Aufnahmeraum der ersten Vorrichtung zum Behandeln von partikelförmigen Feststoffen mittels der Transporteinrichtung, und Behandeln der partikelförmigen Feststoffe mit der ersten Vorrichtung,
- Entnehmen des Reaktors aus dem Aufnahmeraum der ersten Vorrichtung, Einbringen des Reaktors in den Aufnahmeraum der zweiten Vorrichtung zum Behandeln von partikelförmigen Feststoffen mittels der Transporteinrichtung, und Behandeln der partikelförmigen Feststoffe mit der zweiten Vorrichtung,
- Entnehmen des Reaktors aus dem Aufnahmeraum der zweiten Vorrichtung, Einbringen des Reaktors in den Aufnahmeraum der ersten Spülvorrichtung zum Spülen der partikelförmigen Feststoffe mittels der Transporteinrichtung und Spülen der behandelten Feststoffe mit der ersten Spülvorrichtung,
- Entnehmen des Reaktors aus dem Aufnahmeraum der ersten Spülvorrichtung, Einbringen des Reaktors in den Aufnahmeraum der dritten Vorrichtung zum Behandeln von partikelförmigen Feststoffen mittels der Transporteinrichtung, und Behandeln der partikelförmigen Feststoffe mit der dritten Vorrichtung, wobei Ultraschall in den Reaktionsraum eingekoppelt wird,
- Entnehmen des Reaktors aus dem Aufnahmeraum der dritten Vorrichtung, Einbringen des Reaktors in den Aufnahmeraum der zweiten Spülvorrichtung zum Spülen der partikelförmigen Feststoffe mittels der Transporteinrichtung und Spülen der behandelten Feststoffe mit der zweiten Spülvorrichtung,
- Entnehmen des Reaktors aus dem Aufnahmeraum der zweiten Spülvorrichtung, Einbringen des Reaktors in den Aufnahmeraum der Trocknungsvorrichtung zum Trocknen der partikelförmigen Feststoffe mittels der Transporteinrichtung und Trocknen der behandelten Feststoffe mit der Trocknungsvorrichtung, und
- Entnehmen des Reaktors aus dem Aufnahmeraum der Trocknungsvorrichtung mittels der Transporteinrichtung.

Die oben genannte Reihenfolge der verschiedenen Schritte, welchen die partikelförmigen Feststoffe unterzogen werden, stellt dabei die bevorzugte Reihenfolge dar, wobei nicht ausgeschlossen werden soll, dass auch andere Reihenfolgen zielführend sein können. Besonders zu erwähnen ist, dass die partikelförmigen Feststoffe zunächst zweimal hintereinander mit dem Prozessfluid und dem Wasser behandelt werden. Wie erwähnt, kann beispielsweise die Reaktion zwischen dem Metall sowie dem Prozessfluid und dem Wasser sehr heftig ausfallen. Wie ebenfalls erwähnt, ist ein entscheidender Faktor hierbei die spezifische Oberfläche der partikelförmigen Feststoffe, welche von Charge zu Charge deutlich voneinander abweichen kann. In der ersten Vorrichtung wird das Prozessfluid bei vergleichsweise niedriger Temperatur mit den partikelförmigen Feststoffen in Kontakt gebracht, wodurch die Wahrscheinlichkeit, dass es zu einer heftigen und unkontrollierbaren Reaktion kommt, gering ist. Infolge der Behandlung der partikelförmigen Feststoffe in der ersten Vorrichtung wird die spezifische Oberfläche reduziert, weil unter anderem sternförmig nach außen abstehende Abschnitte der partikelförmigen Feststoffe entfernt werden. Bei der anschließenden Behandlung in der zweiten Vorrichtung kann infolgedessen die Temperatur insbesondere des Prozessfluids erhöht werden, was für eine schnelle und umfangreiche Reaktion wünschenswert ist. Da aber, wie erwähnt, in der ersten Vorrichtung die spezifische Oberfläche reduziert wird, ist die Wahrscheinlichkeit, dass es zu einer heftigen und unkontrollierbaren Reaktion kommt, deutlich verringert.

Zum Überführen der partikelförmigen Feststoffe von der ersten Vorrichtung zur zweiten Vorrichtung ergreift die Transporteinrichtung den Reaktor, entnimmt diesen aus dem Aufnahmeraum der ersten Vorrichtung und setzt ihn in den Aufnahmeraum der zweiten Vorrichtung ein. Die partikelförmigen Feststoffe verbleiben dabei im Reaktor, ohne dass die partikelförmigen Feststoffe umgefüllt werden müssten. Entsprechend wird beim Überführen zwischen den übrigen Stationen des Systems verfahren. Nachdem die partikelförmigen Feststoffe in der zweiten Vorrichtung behandelt worden sind, werden sie zum Spülen in die erste Spülvorrichtung auf die oben erläuterte Weise überführt. Nach erfolgter Spülung werden die partikelförmigen Feststoffe in die dritte Vorrichtung überführt, wo neben der Behandlung mit dem Prozessfluid auch eine Behandlung mit Ultraschall durchgeführt wird, welche beispielsweise zum Trennen von Wertstoffen vom Trägermaterial dient. Danach werden die partikelförmigen Feststoffe in die zweite Spülvorrichtung überführt, so dass Reste des Reaktionsgemisches, welche in der dritten Vorrichtung entstanden sind, von den partikelförmigen Feststoffen entfernt werden. Abschließend werden die partikelförmigen Feststoffe in der Trocknungsvorrichtung getrocknet.

Beispielhafte Ausführungsformen der Erfindung werden im Folgenden unter Bezugnahme auf die beigefügten Zeichnungen näher erläutert. Es zeigen
- Figur 1: eine Ausführungsform einer Vorrichtung zum Behandeln von partikelförmigen Feststoffen,
- Figur 2: eine Ausführungsform einer Spülvorrichtung zum Spülen von partikelförmigen Feststoffen,
- Figur 3: eine Ausführungsform einer Trocknungsvorrichtung zum Trocknen von partikelförmigen Feststoffen, und
- Figur 4: eine Darstellung eines Systems zum Behandeln von partikelförmigen Feststoffen, jeweils anhand von prinzipiellen Darstellungen.

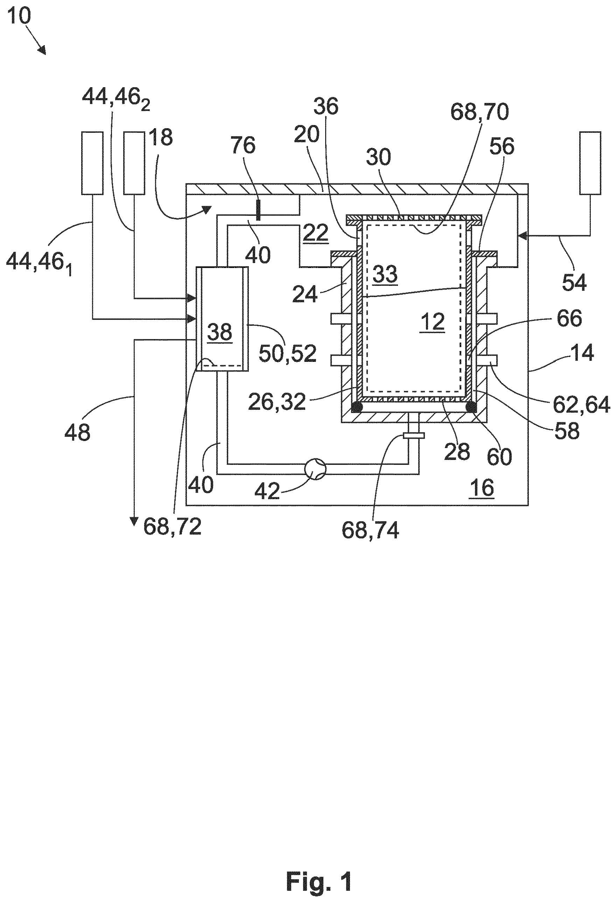

In Figur 1 ist eine Vorrichtung 10 zum Behandeln von partikelförmigen Feststoffen 12 anhand einer prinzipiellen Schnittdarstellung gezeigt. Die partikelförmigen Feststoffe 12, welche mit der Vorrichtung 10 behandelt werden soll, können beispielsweise ein Trägermaterial und Metall aufweisen, können aber noch weitere Komponenten umfassen, von denen insbesondere Wertstoffe zu nennen sind. Es ist aber auch möglich, gänzlich anders zusammengesetzte partikelförmige Feststoffe zu behandeln.

Die Vorrichtung 10 wird von einer Vorrichtungswandung 14 begrenzt, welche einen Innenraum 16 umschließt. Der Innenraum 16 ist durch eine Öffnung 18 zugänglich, die von einem Deckel 20 wahlweise geöffnet oder verschlossen werden kann. Im Innenraum 16 bildet die Vorrichtung 10 einen vom erwähnten Deckel 20 verschließbaren Aufnahmeraum 22, welche einen Aufnahmeabschnitt 24 bildet, auf dessen genaue Funktion später noch genauer eingegangen wird.

Die Vorrichtung 10 umfasst einen Reaktor 26, in welchem die partikelförmigen Feststoffe 12 einbringbar sind. Der Reaktor 26 weist dabei ein erstes Gitter 28 und ein zweites Gitter 30 auf, die zusammen mit einer Reaktorwandung 32 einen Reaktionsraum 33 begrenzen. Die Gitter 28, 30 sind so bemessen, dass sie die Durchströmung des Reaktionsraums 33 zulassen, worauf später noch genauer eingegangen wird, gleichzeitig aber die partikelförmigen Feststoffe 12 im Reaktionsraum 33 zurückhalten. Das zweite Gitter 30 ist lösbar an der Reaktorwandung 32 befestigt, wobei die hierzu verwendeten Befestigungsmittel wie Klammern oder Schrauben nicht gezeigt sind.

Der Reaktor weist zudem eine oder mehrere Seitenöffnungen 36 auf, auf deren Funktion ebenfalls später noch genauer eingegangen wird.

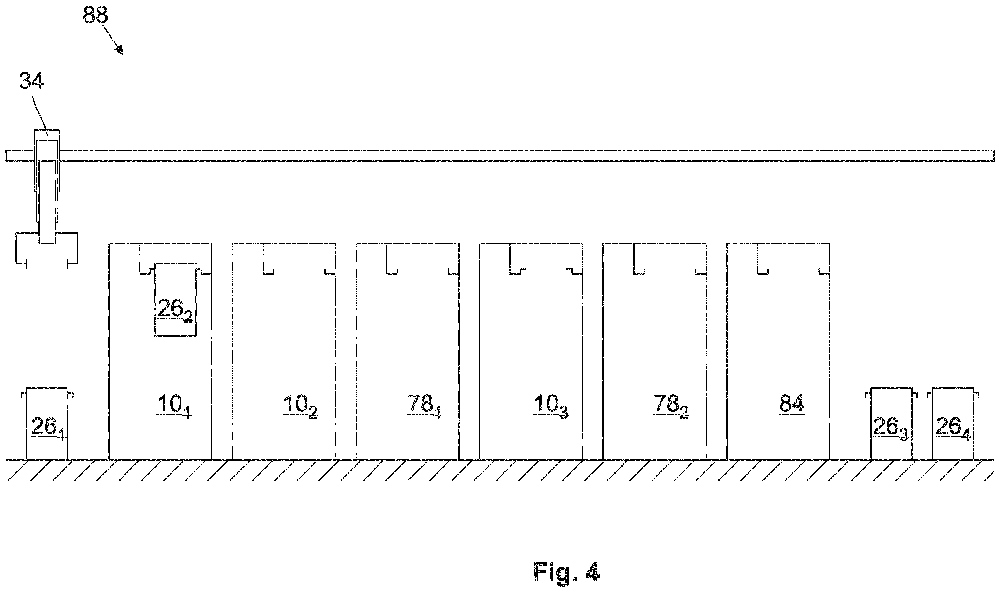

Der Reaktor 26 kann in den bereits erwähnten Aufnahmeabschnitt 24 eingebracht werden, wozu eine hier nicht gezeigte Transporteinrichtung 34 (siehe hierzu Figur 4) verwendet werden kann. Hierzu wird der Deckel 20, mit welchem sowohl der Innenraum 16 als auch der Aufnahmeraum 22 verschlossen werden kann, geöffnet.

Des Weiteren ist im Innenraum 16 der Vorrichtung 10 ein Vorlagebehälter 38 angeordnet, der ebenfalls als ein Teil des Aufnahmeraums 22 aufgefasst werden soll. Darüber hinaus ist der Aufnahmeabschnitt 24 mit Rohrleitungen 40 mit dem Vorlagebehälter 38 verbunden, die ebenfalls einen Teil des Aufnahmeraums 22 bilden. Ferner ist eine Fördereinheit 42 vorgesehen, welche mit einer der Rohrleitungen 40 kommuniziert.

Mittels einer Zufuhrleitung 44 kann ein Prozessfluid in den Aufnahmeraum 22 geführt werden, welches anschließend mit der Fördereinheit 42 innerhalb des Aufnahmeraums 22 gefördert und umgewälzt werden kann. In der dargestellten Ausführungsform umfasst die Zufuhrleitung 44 eine erste Zufuhr-Unterleitung 46₁, mit welcher als Prozessfluid beispielsweise eine Lauge oder eine Säure in den Vorlagebehälter 38 gefördert werden kann. Darüber hinaus umfasst die Zufuhrleitung 44 eine zweite Zufuhr-Unterleitung 46₂, mit welcher eine zweite Substanz wie Wasser in den Vorlagebehälter 38 gefördert werden kann. Die hierzu notwendigen Pumpen und Ventile sind nicht dargestellt. Es besteht jedoch die Möglichkeit, mit dem Verhältnis des zugeführten Volumens von Lauge oder Säure und Wasser die Konzentration wunschgemäß einzustellen.

Ferner ist eine Abführleitung 48 vorgesehen, mit welcher das Prozessfluid aus dem Aufnahmeraum 22 abgeführt werden kann. Wie aus der Figur 1 ersichtlich, ist der Vorlagebehälter 38 mit einem Doppelmantel 50 versehen, der Teil einer nicht näher dargestellten Temperierungseinrichtung 52 ist. Mit dieser Temperierungseinrichtung 52 kann das Prozessfluid auf die gewünschte Temperatur gebracht und auf dieser gehalten werden. Hierzu kann eine nicht dargestellte Temperaturmesseinheit vorgesehen sein.

Weiterhin verfügt die Vorrichtung 10 über eine Kühlmittelleitung 54, mit welcher ein Kühlmittel, insbesondere Wasser, in den Aufnahmeraum 22 eingebracht werden kann.

Wie bereits erwähnt, kann der Reaktor 26, wie dargestellt, in den Aufnahmeabschnitt 24 eingebracht werden. Der Reaktor 26 ist hierzu mit Befestigungsabschnitten 56 versehen, mit welchen der Reaktor 26 gegenüber dem Aufnahmeabschnitt 24 positioniert werden kann. Der Aufnahmeabschnitt 24 weist dabei eine zur Form des Reaktors 26 weitgehend komplementäre Form auf, so dass in radialer Richtung ein ringförmiger Zwischenraum 58 zwischen dem Reaktor 26 und dem Aufnahmeabschnitt 24 entsteht. Im Aufnahmeabschnitt 24 ist eine Dichtung 60 angeordnet, welche im Bereich des ersten Gitters 28 mit dem Reaktor 26 zusammenwirkt und den Zwischenraum 58 gegenüber dem Reaktor 26 und dem Aufnahmeabschnitt 24 abdichtet. Der ringförmige Zwischenraum 58 wird daher einerseits von der Dichtung 60 und andererseits vom Befestigungsabschnitt 56 des Reaktors 26 begrenzt. Dabei kann im Befestigungsabschnitt 56 ebenfalls eine hier nicht dargestellte Dichtung 60 angeordnet sein. Wenn das Prozessfluid innerhalb des Aufnahmeraums 22 bei in den Aufnahmeabschnitt 24 eingebrachten Reaktor 26 umgewälzt wird, durchströmt das Prozessfluid den Reaktionsraum 33, wobei das Prozessfluid durch das erste Gitter 28 in den Reaktionsraum 33 eindringt und durch das zweite Gitter 30 den Reaktionsraum 33 verlässt. Das Prozessfluid kann aber die Dichtung 60 nicht passieren und daher nicht direkt in den Zwischenraum 58 gelangen.

Zudem ist die Vorrichtung 10 mit einer Ultraschalleinrichtung 62 versehen, die über eine Anzahl von Ultraschallschwingern 64 verfügt. Die Ultraschallschwingern 64 sind am Aufnahmeabschnitt 24 angeordnet, wobei in der Reaktorwandung 32 eine der Anzahl der Ultraschallschwinger 64 entsprechende Anzahl von Durchbrüchen 66 vorgesehen ist. Die Ultraschallschwinger 64 sind so angeordnet, dass dann, wenn der Reaktor 26 in den Aufnahmeabschnitt 24 eingebracht ist, die Ultraschallschwinger 64 mit den Durchbrüchen 66 in Deckung gebracht sind und mit diesen fluchten. Der Befestigungsabschnitt 56 kann dabei so ausgeführt sein, dass der Reaktor 26 nur in bestimmten Drehstellungen in den Aufnahmeraum 22 eingebracht werden kann, wozu beispielsweise eine Art Bajonettverschluss vorgesehen werden kann. Infolge der fluchtenden Ausrichtung kann der Ultraschall direkt in den Reaktionsraum 33 gelangen, ohne nennenswert von der Reaktorwandung 32 gedämpft zu werden.

Ferner ist eine Filtereinheit 68 vorgesehen, welche in der dargestellten Ausführungsform einen Siebeinsatz 70 umfasst, der im Reaktor 26 angeordnet ist und eine Maschenweite von 0,5 bis 5 mm aufweist. Der Siebeinsatz 70, der mehrere, voneinander trennbare Abschnitte aufweisen kann, bedeckt dabei das erste Gitter 28, das zweite Gitter 30, die Seitenöffnungen 36 und die Durchbrüche 66. Zudem umfasst die Filtereinheit 68 einen Vorfilter 72 mit einer Porengröße von 50 µm bis 500 µm, der sich im Vorlagebehälter 38 befindet. Darüber hinaus ist ein Feinfilter 74 mit einer Porengröße von 1 µm bis 50 µm der Filtereinheit 68 zugeordnet, der in der zum Aufnahmeabschnitt 24 führenden Rohrleitung 40 positioniert ist. Die Verwendung der Begriffe "Maschenweite" und "Porengröße" soll die unterschiedlichen Größenbereiche kennzeichnen, in denen die Filtereinheit 68 wirkt.

Die Vorrichtung 10 ist weiterhin mit einer Temperaturbestimmungseinheit 76 versehen, mit welcher die Temperatur des Prozessfluids bestimmt werden kann.

Die Vorrichtung 10 wird auf folgende Weise betrieben: Zunächst werden die partikelförmigen Feststoffe 12 in den Reaktionsraum 33 eingebracht, wobei das zweite Gitter 30 vom Reaktor 26 entfernt und der Deckel 20 geöffnet sind. Wie aus Figur 1 ersichtlich, wird der Reaktionsraum 33 zu ca. 2/3 gefüllt, so dass noch ein bestimmter Freiraum zum zweiten Gitter 30 verbleibt. Anschließend wird das zweite Gitter 30 am Reaktor 26 befestigt und der Reaktor 26 unter Verwendung der in Figur 4 gezeigten Transporteinrichtung 34 in den Aufnahmeabschnitt 24 eingehängt. Der Deckel 20 wird nun geschlossen und das gewünschte Volumen von Wasser und Lauge oder Säure in den Vorlagebehälter 38 gefördert, wobei der Vorlagebehälter 38 auch nicht komplett gefüllt wird. Die Fördereinheit 42 wird aktiviert, so dass das Prozessfluid, hier die Lauge oder die Säure und das Wasser, vom Vorlagebehälter 38 zum Aufnahmeabschnitt 24 gefördert wird. Das Prozessfluid tritt nun durch das erste Gitter 28 in den Reaktionsraum 33 ein und durchströmt dabei unter Ausbildung einer Art Wirbelbett den Reaktionsraum 33. Hierbei können die partikelförmigen Feststoffe 12 angehoben werden und den Freiraum zum zweiten Gitter 30 ganz oder teilweise nutzen. Infolgedessen kommt es zu einer Reaktion zwischen dem Prozessfluid und den partikelförmigen Feststoffen 12. Das infolge dieser Reaktion entstehende Reaktionsgemisch verlässt dann den Reaktionsraum 33 durch das zweite Gitter 30 und den Siebeinsatz 70. Die behandelten partikelförmigen Feststoffe 12 werden vom zweiten Gitter 30 und vom Siebeinsatz 70 im Reaktionsraum 33 zurückgehalten und werden insbesondere daran gehindert, durch die Seitenöffnungen 36 und die Durchbrüche 66 in den Zwischenraum 58 zu gelangen. Wie erkennbar, sind die Durchbrüche 66 größer als die Löcher des zweiten Gitters 30. Aufgrund der Ausbildung eines Wirbelbetts können sich das zweite Gitter 30 und/oder der Siebeinsatz 70 vor dem zweiten Gitter 30 zusetzen, so dass es nicht oder nur in geringem Umfang vom Reaktionsgemisch durchströmt wird. Die Durchbrüche 66 setzen sich aber aufgrund ihrer Anordnung und Ausgestaltung nicht oder nur in vernachlässigbarem Umfang zu.

Das Reaktionsgemisch gelangt dann in den Vorlagebehälter 38, wo es den Vorfilter 72 passieren muss und entsprechend gefiltert wird. Anschließend gelangt das Reaktionsgemisch durch den Feinfilter 74 in den Reaktionsraum 33 und durchströmt die partikelförmigen Feststoffe 12. Das Reaktionsgemisch kann folglich im Kreislauf durch den Aufnahmeraum 22 gefördert und umgewälzt werden. Das Reaktionsgemisch kann so lange im Aufnahmeraum 22 umgewälzt werden, bis dass die partikelförmigen Feststoffe 12 im gewünschten Umfang behandelt worden ist. Die wesentliche Reaktion findet dabei zwischen dem Prozessfluid und dem Metall statt. Dabei wird die Temperatur des Reaktionsgemischs mit der Temperaturbestimmungseinheit 76 bestimmt. Sofern die Temperatur des Reaktionsgemischs einen bestimmten Schwellenwert überschreitet, ist mit einem unkontrollierbaren Verlauf der Reaktion zwischen der dem Prozessfluid und dem Metall zu rechnen. In diesem Fall wird das Kühlmittel unter Verwendung der Kühlmittelleitung 54 in den Aufnahmeraum 22 gefördert und folglich die Reaktion zwischen dem Prozessfluid und dem Metall gestoppt, wobei auch die Fördereinheit 42 angehalten wird, um die Ausbildung des Wirbelbetts zu unterbinden. Die betreffende Charge der partikelförmigen Feststoffe 12 muss entsorgt werden.

Wenn jedoch die Reaktion planmäßig abgelaufen ist, wird die Umwälzung des Reaktionsgemischs nach der gewünschten Zeit gestoppt. Anschließend wird die Ultraschalleinrichtung 62 aktiviert und Ultraschall in die partikelförmigen Feststoffe 12 eingekoppelt. Da der Zwischenraum 58 mit dem Reaktionsgemisch gefüllt ist, kann der Ultraschall gut weitergeleitet werden. Eine Dämpfung aufgrund einer Luftschicht wird vermieden. Danach kann die Umwälzung erneut aktiviert werden. Es ist auch möglich, den Ultraschall während der Umwälzung einzukoppeln.

Nach abgeschlossener Behandlung wird das Reaktionsgemisch so weit wie möglich in den Vorlagebehälter 38 gefördert und der Reaktor 26 mit der Transporteinrichtung 34 aus der Vorrichtung 10 entnommen. Die behandelten partikelförmigen Feststoffe 12 können anschließend auf die gewünschte Weise weiterverarbeitet werden.

Je nachdem, wie weit das Reaktionsgemisch noch für die Behandlung einer weiteren Charge verwendet werden kann, kann das Reaktionsgemisch im Aufnahmeraum 22 und insbesondere im Vorlagebehälter 38 verbleiben und erneut umgewälzt werden, sobald ein weiterer Reaktor 26 mit einer weiteren, zu behandelnden Charge der partikelförmigen Feststoffe 12 in den Aufnahmeabschnitt 24 eingesetzt worden ist. Wenn das Reaktionsgemisch aber so weit verbraucht ist, dass es nicht mehr verwendet werden kann, kann es mit der Abführleitung 48 aus dem Aufnahmeraum 22 entfernt werden.

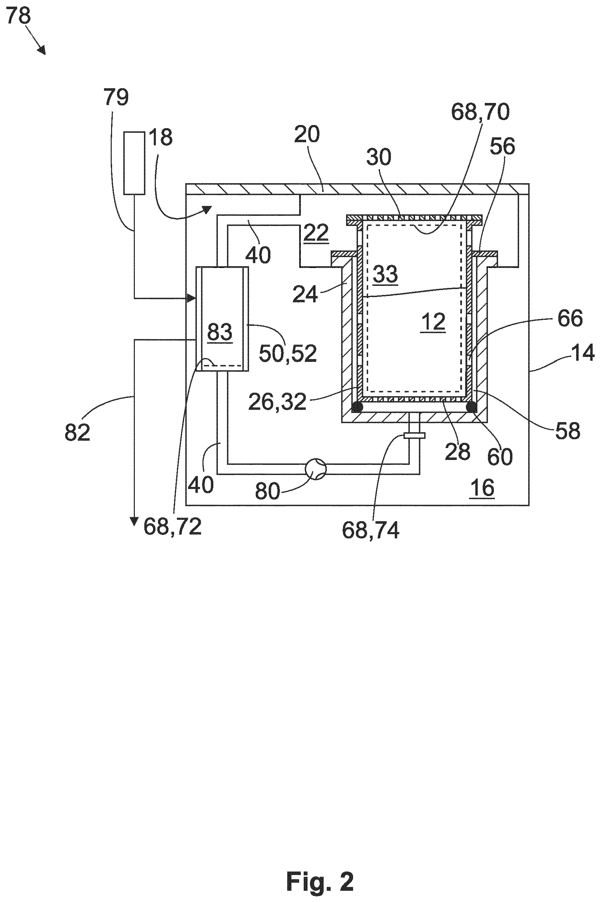

In Figur 2 ist eine Spülvorrichtung 78 zum Spülen von partikelförmigen Feststoffen 12 gezeigt, wobei der grundsätzliche Aufbau der Spülvorrichtung 78 weitgehend dem Aufbau der in Figur 1 gezeigten Vorrichtung 10 zum Behandeln von solchen partikelförmigen Feststoffen 12 entspricht. Insbesondere wird auch hier der Reaktor 26 in den Aufnahmeabschnitt 24 eingebracht. Der wesentliche Unterschied liegt darin, dass kein Prozessfluid, sondern ein Spülfluid verwendet wird, welches mittels einer Spülfluid-Zufuhrleitung 79 in den Aufnahmeraum 22 eingebracht und dort umgewälzt wird, wozu eine Spülfluid-Fördereinheit 80 verwendet wird. Das Spülfluid kann insbesondere Wasser sein. Da aber kein Prozessfluid umgewälzt wird, findet auch keine entsprechende Reaktion zwischen dem Prozessfluid und den partikelförmigen Feststoffen 12 statt. Folglich kann auf das Vorsehen einer Temperaturbestimmungseinheit 76 und einer Kühlmittelleitung 54 verzichtet werden. Zudem kann die Zufuhrleitung 44 so ausgebildet sein, dass nur das Spülfluid in den Aufnahmeraum 22 eingebracht werden kann. Das Spülfluid kann mittels einer Spülfluid-Abführleitung 82 aus dem Aufnahmeraum 22 entfernt werden. Die Möglichkeit, eine Lauge zuzuführen, wird nicht benötigt. Auch das Vorsehen einer Ultraschalleinrichtung 62 ist nicht notwendig, aber auch nicht ausgeschlossen. Die Spülvorrichtung 78 weist aber auch die Filtereinheit 68 auf. Im Übrigen wird die Spülvorrichtung 78 auf dieselbe Weise betrieben wie die Vorrichtung 10 zum Behandeln der partikelförmigen Feststoffe 12. Insbesondere wird ebenfalls beim Durchströmen des Reaktionsraums 33 einer Art Wirbelbett erzeugt, so dass die partikelförmigen Feststoffe 12 in intensiven Kontakt mit dem Spülfluid kommen können. Zudem ist anzumerken, dass das Spülfluid ebenfalls in einem Spülfluid-Vorlagebehälter 38 vorgehalten und innerhalb des Aufnahmeraums 22 umgewälzt werden kann.

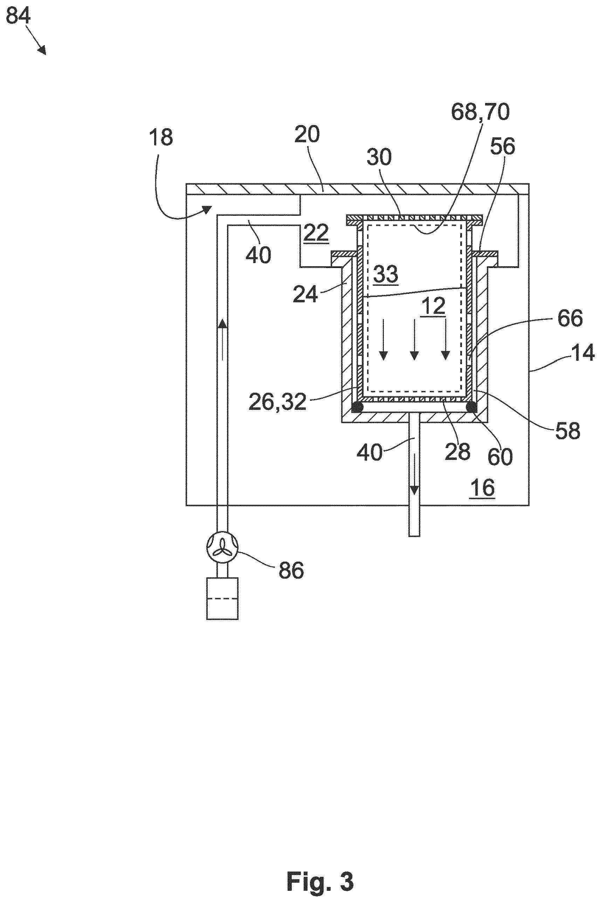

In Figur 3 ist eine Trocknungsvorrichtung 84 zum Trocknen von partikelförmigen Feststoffen 12 gezeigt. Auch die Trocknungsvorrichtung 84 ist im Wesentlichen genauso aufgebaut wie die in Figur 1 beschriebene Vorrichtung 10 zum Behandeln von solchen partikelförmigen Feststoffen 12. Insbesondere wird der Reaktor 26 in den Aufnahmeabschnitt 24 eingebracht. Allerdings wird hier das Trocknungsfluid, insbesondere erwärmte Luft, nicht umgewälzt. Infolgedessen weist die Trocknungsvorrichtung 84 auch keinen Vorlagebehälter 38 auf. Vielmehr wird Luft aus der Umgebung der Trocknungsvorrichtung 84 mittels einer Ansaugeinheit 86, die beispielsweise als ein Seitenkanalkompressor ausgestaltet sein kann, angesaugt und dabei auf die gewünschte Temperatur erwärmt. Die erwärmte Luft wird derart zum Reaktor 26 geführt, dass diese im Gegensatz zum Prozessfluid und zum Spülfluid durch das zweite Gitter 30 in den Reaktionsraum 33 eindringt, die partikelförmigen Feststoffe 12 durchströmt und anschließend den Reaktionsraum 33 durch das erste Gitter 28 wieder verlässt. Wie erwähnt, wird das Trocknungsfluid nicht umgewälzt, sondern direkt wieder an die Umgebung abgegeben. Die erwärmte Luft kann aber auch in derselben Richtung wie das Prozessfluid und das Spülfluid durch das erste Gitter 28 in den Reaktionsraum 33 eingeblasen werden.

In Figur 4 ist ein System 88 zum Behandeln von partikelförmigen Feststoffen 12 anhand einer prinzipiellen Darstellung gezeigt. Das System 88 umfasst von links nach rechts gesehen eine erste Vorrichtung 10₁ und eine zweite Vorrichtung 10₂ zum Behandeln der partikelförmigen Feststoffe 12, die so aufgebaut sein können wie diejenige, die in Figur 1 gezeigt ist. Ferner umfasst das System 88 eine erste Spülvorrichtung 78₁, die so aufgebaut sein kann wie diejenige, die in Figur 2 dargestellt ist. Weiterhin weist das System 88 eine dritte Vorrichtung 10₃ zum Behandeln der partikelförmigen Feststoffe 12, eine zweite Spülvorrichtung 78₂ und eine Trocknungsvorrichtung 84 auf, wobei die Trocknungsvorrichtung 84 so aufgebaut sein kann wie diejenige, die in Figur 3 gezeigt ist.

Die partikelförmigen Feststoffe 12 werden auf folgende Weise behandelt: In der ersten Vorrichtung 10 zum Behandeln der partikelförmigen Feststoffe wird das Prozessfluid bei vergleichsweise niedriger Temperatur mit den partikelförmigen Feststoffen 12 in Kontakt gebracht, wodurch die Wahrscheinlichkeit, dass es zu einer heftigen und unkontrollierbaren Reaktion zwischen der Lauge und dem Metall kommt, sehr gering ist. Infolge der Behandlung der partikelförmigen Feststoffe 12 in der ersten Vorrichtung 10 wird die spezifische Oberfläche der die partikelförmigen Feststoffe 12 reduziert, weil unter anderem sternförmig nach außen stehende Abschnitte der partikelförmigen Feststoffe weg geätzt werden. Bei der anschließenden Behandlung in der zweiten Vorrichtung 10 kann infolgedessen die Temperatur insbesondere des Prozessfluids erhöht werden, was zu einer schnellen und umfangreichen Reaktion zwischen den partikelförmigen Feststoffen 12 und dem Prozessfluid führt. Da aber, wie erwähnt, in der ersten Vorrichtung 10 die spezifische Oberfläche reduziert wird, ist die Wahrscheinlichkeit, dass es zu einer heftigen und unkontrollierbaren Reaktion kommt, deutlich verringert.

Zum Überführen der partikelförmigen Feststoffe 12 von der ersten Vorrichtung 10₁ zur zweiten Vorrichtung 10₂ ergreift die Transporteinrichtung 34 den Reaktor 26, entnimmt diesen aus dem Aufnahmeraum 22 der ersten Vorrichtung 10 und setzt ihn in den Aufnahmeraum 22 der zweiten Vorrichtung 10₂ ein. Die partikelförmigen Feststoffe 12 verbleiben dabei im Reaktor 26, ohne dass die partikelförmigen Feststoffe 12 umgefüllt werden müssten. Entsprechend wird beim Überführen zwischen den übrigen Stationen des Systems 88 verfahren. Nachdem die partikelförmigen Feststoffe 12 in der zweiten Vorrichtung 10₂ behandelt worden sind, werden sie zum Spülen auf die oben erläuterte Weise in die erste Spülvorrichtung 78₁ überführt. Nach erfolgter Spülung werden die partikelförmigen Feststoffe 12 in die dritte Vorrichtung 10₃ überführt, wo neben der Behandlung mit dem Prozessfluid auch eine Behandlung mit Ultraschall durchgeführt wird. Danach werden die partikelförmigen Feststoffe 12 in die zweite Spülvorrichtung 78₂ überführt, so dass Reste des Reaktionsgemisches, welche in der dritten Vorrichtung 10₃ entstanden sind, von den partikelförmigen Feststoffen 12 entfernt werden. Abschließend werden die partikelförmigen Feststoffe 12 in der Trocknungsvorrichtung 84 getrocknet.

In Figur 4 ist ein erster Reaktor 26₁, ein zweiter Reaktor 26₂, ein dritter Reaktor 26₃ und ein vierter Reaktor 26₄ gezeigt. Während im ersten Reaktor 26₁ unbehandelte partikelförmige Feststoffe 12 enthalten ist, werden die partikelförmigen Feststoffe 12 des zweiten Reaktors 26₂ gerade in der ersten Vorrichtung 10₁ behandelt. Die partikelförmigen Feststoffe 12 im dritten Reaktor 26₃ und vierten Reaktor 26₄ haben das System 88 bereits komplett durchlaufen und ist fertig aufbereitet. Wenn die partikelförmigen Feststoffe 12 das System 88 durchlaufen, verbleiben sie immer im Reaktor 26, der von der Transporteinrichtung 34 von Station zu Station bewegt wird, ohne umgefüllt zu werden.

### Bezugszeichenliste

- 10: Vorrichtung
- 10₁ - 10₃: Vorrichtung
- 12: partikelförmige Feststoffe
- 14: Vorrichtungswandung
- 16: Innenraum
- 18: Öffnung

- 20: Deckel
- 22: Aufnahmeraum
- 24: Aufnahmeabschnitt
- 26: Reaktor
- 26₁ - 26₄: Reaktor
- 28: erstes Gitter

- 30: zweites Gitter
- 32: Reaktorwandung
- 33: Reaktionsraum
- 34: Transporteinrichtung
- 36: Seitenöffnung
- 38: Vorlagebehälter

- 40: Rohrleitung
- 42: Fördereinheit
- 44: Zufuhrleitung
- 46₁: erste Zufuhr-Unterleitung
- 46₂: zweite Zufuhr-Unterleitung
- 48: Abführleitung

- 50: Doppelmantel
- 52: Temperierungseinheit
- 54: Kühlmittelleitung
- 56: Befestigungsabschnitt
- 58: Zwischenraum

- 60: Dichtung
- 62: Ultraschalleinrichtung
- 64: Ultraschallschwinger
- 66: Durchbruch
- 68: Filtereinheit

- 70: Siebeinsatz
- 72: Vorfilter
- 74: Feinfilter
- 76: Temperaturbestimmungseinheit
- 78: Spülvorrichtung
- 78₁ - 78₂: Spülvorrichtung
- 79: Spülfluid-Zufuhrleitung

- 80: Spülfluid-Fördereinheit
- 82: Spülfluid-Abführleitung
- 83: Spülfluid-Vorlagebehälter
- 84: Trocknungsvorrichtung
- 86: Ansaugeinheit
- 88: System

## Patentansprüche

1. Vorrichtung (10) zum Behandeln von partikelförmigen Feststoffen (12), wobei die Vorrichtung (10) umfasst:
- zumindest einen Reaktor (26), in welchen die partikelförmigen Feststoffe (12) einbringbar sind, wobei der Reaktor (26)
o ein erstes Gitter (28) und
o ein zweites Gitter (30) aufweist, welche einen Reaktionsraum (33) begrenzen und die in den Reaktionsraum (33) eingebrachten partikelförmigen Feststoffe (12) im Reaktionsraum (33) zurückhalten, und
- zumindest einen verschließbaren oder verschlossenen Aufnahmeraum (22), in welchen der Reaktor (26) einbringbar ist,
- eine Zufuhrleitung (44) zum Zuführen eines Prozessfluids in den Aufnahmeraum (22),
- zumindest eine Fördereinheit (42) zum Fördern des Prozessfluids sowie eines Reaktionsgemisches aus dem Prozessfluid und den partikelförmigen Feststoffen (12) durch den Aufnahmeraum (22), wobei der Aufnahmeraum (22) derart ausgestaltet ist, dass das Prozessfluid sowie das Reaktionsgemisch bei aktivierter Fördereinheit (42) das erste Gitter (28), den Reaktionsraum (33) und das zweite Gitter (30) durchströmen, wenn der Reaktor (26) in den Aufnahmeraum (22) eingebracht ist.

2. Vorrichtung (10) nach Anspruch 1,
**dadurch gekennzeichnet, dass** der Aufnahmeraum (22) einen Aufnahmeabschnitt (24) umfasst, in welchen der Reaktor (26) unter Ausbildung eines zumindest in radialer Richtung geschlossenen Zwischenraums (58) zwischen dem Reaktor (26) und dem Aufnahmeabschnitt (24) einbringbar ist.

3. Vorrichtung (10) nach einem der Ansprüche 1 oder 2,
**dadurch gekennzeichnet, dass**
- im Aufnahmeraum (22) ein Vorlagebehälter (38) zum Vorhalten des Prozessfluids und/oder
- zumindest eine Filtereinheit (68 ) zum Filtern des Reaktionsgemischs angeordnet ist.

4. Vorrichtung (10) nach einem der vorherigen Ansprüche, **dadurch gekennzeichnet, dass** die Vorrichtung (10) eine Ultraschalleinrichtung (62) zum Einkoppeln von Ultraschall in den Reaktionsraum (33) aufweist.

5. Vorrichtung (10) nach den Ansprüchen 2 und 4,
**dadurch gekennzeichnet, dass** die Ultraschalleinrichtung (62) eine Anzahl von Ultraschallschwingern (64) aufweist, welche am Aufnahmeabschnitt (24) angeordnet sind.

6. Vorrichtung (10) nach Anspruch 5,
**dadurch gekennzeichnet, dass** der Reaktor (26) eine der Anzahl der Ultraschallschwingern (64) entsprechende Anzahl von Durchbrüchen (66) aufweist, welche so angeordnet sind, dass sie mit den Ultraschallschwingern (64) fluchten, wenn der Reaktor (26) in den Aufnahmeabschnitt (24) eingebracht ist.

7. Spülvorrichtung (78) zum Spülen von partikelförmigen Feststoffen (12), wobei die Spülvorrichtung (78) umfasst:
- zumindest einen Reaktor (26), in welchen die partikelförmigen Feststoffe (12) einbringbar sind, wobei der Reaktor (26)
o ein erstes Gitter (28) und
o ein zweites Gitter (30) aufweist, welche einen Reaktionsraum (33) begrenzen und die in den Reaktionsraum (33) eingebrachten partikelförmigen Feststoffe (12) im Reaktionsraum (33) zurückhalten, und
- zumindest einen verschließbaren oder verschlossenen Aufnahmeraum (22), in welchen der Reaktor (26) einbringbar ist,
- eine Spülfluid-Zufuhrleitung (79) zum Zuführen eines Spülfluids in den Aufnahmeraum (22),
- zumindest eine Spülfluid-Fördereinheit (80) zum Fördern des Spülfluids durch den Aufnahmeraum (22), wobei der Aufnahmeraum (22) derart ausgestaltet ist, dass das Spülfluid bei aktivierter Spülfluid-Fördereinheit (80) das erste Gitter (28), den Reaktionsraum (33) und das zweite Gitter (30) durchströmt, wenn der Reaktor (26) in den Aufnahmeraum (22) eingebracht ist.

8. Spülvorrichtung (78) nach Anspruch 7,
**dadurch gekennzeichnet, dass**
- im Aufnahmeraum (22) ein Spülfluid-Vorlagebehälter (83) zum Vorhalten des Spülfluids angeordnet ist und/oder
- die Spülvorrichtung (78) zumindest eine Spülfluid-Abführleitung (82) zum Abführen des Spülfluids aus dem Aufnahmeraum (22) aufweist.

9. Trocknungsvorrichtung (84) zum Trocknen von partikelförmigen Feststoffen (12), wobei die Trocknungsvorrichtung (84) umfasst:
- zumindest einen Reaktor (26), in welchen die partikelförmigen Feststoffe (12) einbringbar sind, wobei der Reaktor (26)
o ein erstes Gitter (28) und
o ein zweites Gitter (30) aufweist, welche einen Reaktionsraum (33) begrenzen und die in den Reaktionsraum (33) eingebrachten partikelförmigen Feststoffe (12) im Reaktionsraum (33) zurückhalten, und
- zumindest einen verschließbaren oder verschlossenen Aufnahmeraum (22), in welchen der Reaktor (26) einbringbar ist,
- zumindest eine Ansaugeinheit (86) zum Fördern eines Trocknungsfluids durch den Aufnahmeraum (22), wobei der Aufnahmeraum (22) derart ausgestaltet ist, dass das Trocknungsfluid bei aktivierter Ansaugeinheit das erste Gitter (28), den Reaktionsraum (33) und das zweite Gitter (30) durchströmt, wenn der Reaktor (26) in den Aufnahmeraum (22) eingebracht ist.

10. System zum Behandeln von partikelförmigen Feststoffen (12), umfassend
- eine erste Vorrichtung (10₁) zum Behandeln von partikelförmigen Feststoffen (12) nach einem der Ansprüche 1 bis 3,
- eine zweite Vorrichtung (10₂) zum Behandeln von partikelförmigen Feststoffen (12) nach einem der Ansprüche 1 bis 3,
- eine erste Spülvorrichtung (78₁) zum Spülen der partikelförmigen Feststoffe (12) nach einem der Ansprüche 7 oder 8,
- eine dritte Vorrichtung (10₃) zum Behandeln von partikelförmigen Feststoffen (12) nach einem der Ansprüche 4 bis 6,
- eine zweite Spülvorrichtung (78₂) zum Spülen der partikelförmigen Feststoffe (12) nach einem der Ansprüche 7 oder 8,
- eine Trocknungsvorrichtung (84) zum Trocknen der partikelförmigen Feststoffe (12) nach Anspruch 9, sowie
- einer Transporteinrichtung (34) zum Transportieren des Reaktors (26) innerhalb des Systems.

11. Verfahren zum Behandeln von partikelförmigen Feststoffen (12) mit einer Vorrichtung (10) nach einem der Ansprüche 1 bis 6, umfassend folgende Schritte:
- Einbringen der zu behandelnden partikelförmigen Feststoffe (12) in den Reaktionsraum (33),
- Einbringen des Reaktors (26) in den Aufnahmeraum (22),
- Zuführen eines Prozessfluids in den Aufnahmeraum (22), und
- Fördern des Prozessfluids sowie eines Reaktionsgemisches aus dem Prozessfluid und den partikelförmigen Feststoffen (12) durch den Aufnahmeraum (22) derart, dass das Prozessfluid und das Reaktionsgemisch bei aktivierter Fördereinheit (42) das erste Gitter (28), den Reaktionsraum (33) und das zweite Gitter (30) durchströmen.

12. Verfahren nach Anspruch 11, umfassend die folgenden Schritte:
- Einkoppeln von Ultraschall in den Reaktionsraum (33) mittels der Ultraschalleinrichtung (62).

13. Verfahren nach einem der Ansprüche 11 oder 12, umfassend die folgenden Schritte:
- Zuführen eines Spülfluids in den Aufnahmeraum (22) mittels einer Spülfluid-Förderleitung, und
- Fördern des Spülfluids durch den Aufnahmeraum (22) mittels einer Spülfluid-Fördereinheit (80) derart, dass das Spülfluid bei aktivierter Spülfluid-Fördereinheit (80) das erste Gitter (28), den Reaktionsraum (33) und das zweite Gitter (30) durchströmt.

14. Verfahren nach einem der Ansprüche 11 bis 13, umfassend die folgenden Schritte:
- Fördern eines Trocknungsfluids durch den Aufnahmeraum (22) mittels einer Ansaugeinheit, wobei der Aufnahmeraum (22) derart ausgestaltet ist, dass das Trocknungsfluid bei aktivierter Ansaugeinheit das erste Gitter (28), den Reaktionsraum (33) und das zweite Gitter (30) durchströmt.

15. Verfahren zum Behandeln von partikelförmigen Feststoffen (12) mit einem System nach Anspruch 10, umfassend die folgenden Schritte:
- Einbringen des Reaktors (26) in den Aufnahmeraum (22) der ersten Vorrichtung (10₁) zum Behandeln von partikelförmigen Feststoffen (12) mittels der Transporteinrichtung (34), und Behandeln der partikelförmigen Feststoffe (12) mit der ersten Vorrichtung (10₁),
- Entnehmen des Reaktors (26) aus dem Aufnahmeraum (22) der ersten Vorrichtung (10₁), Einbringen des Reaktors (26) in den Aufnahmeraum (22) der zweiten Vorrichtung (10₂) zum Behandeln von partikelförmigen Feststoffen (12) mittels der Transporteinrichtung (34), und Behandeln der partikelförmigen Feststoffe (12) mit der zweiten Vorrichtung (10₂),
- Entnehmen des Reaktors (26) aus dem Aufnahmeraum (22) der zweiten Vorrichtung (10₂), Einbringen des Reaktors (26) in den Aufnahmeraum (22) der ersten Spülvorrichtung (78₁) zum Spülen der partikelförmigen Feststoffe (12) mittels der Transporteinrichtung (34) und Spülen der behandelten Feststoffe (12) mit der ersten Spülvorrichtung (78₁),
- Entnehmen des Reaktors (26) aus dem Aufnahmeraum (22) der ersten Spülvorrichtung (78₁), Einbringen des Reaktors (26) in den Aufnahmeraum (22) der dritten Vorrichtung (10₃) zum Behandeln von partikelförmigen Feststoffen (12) mittels der Transporteinrichtung (34), und Behandeln der partikelförmigen Feststoffe (12) mit der dritten Vorrichtung (10), wobei Ultraschall in den Reaktionsraum (33) eingekoppelt wird,
- Entnehmen des Reaktors (26) aus dem Aufnahmeraum (22) der dritten Vorrichtung (10₃), Einbringen des Reaktors (26) in den Aufnahmeraum (22) der zweiten Spülvorrichtung (78₂) zum Spülen der partikelförmigen Feststoffe (12) mittels der Transporteinrichtung (34) und Spülen der behandelten Feststoffe (12) mit der zweiten Spülvorrichtung (78₂),
- Entnehmen des Reaktors (26) aus dem Aufnahmeraum (22) der zweiten Spülvorrichtung (78₂), Einbringen des Reaktors (26) in den Aufnahmeraum (22) der Trocknungsvorrichtung (84) zum Trocknen der partikelförmigen Feststoffe (12) mittels der Transporteinrichtung (34) und Trocknen der behandelten Feststoffe (12) mit der Trocknungsvorrichtung (84), und
- Entnehmen des Reaktors (26) aus dem Aufnahmeraum (22) der Trocknungsvorrichtung (84) mittels der Transporteinrichtung (34).

## Claims

1. A device (10) for treating particulate solid materials (12), wherein the device (10) comprises:
- at least one reactor (26) into which the particulate solid materials (12) can be introduced, wherein the reactor (26) comprises
o a first grating (28) and
o a second grating (30), which delimit a reaction chamber (33) and retain in the reaction chamber (33) the particulate solid materials (12) that have been introduced into the reaction chamber (33), and
- at least one closeable or closed receiving space (22) into which the reactor (26) can be introduced,
- a supply line (44) for supplying a process fluid into the receiving space (22),
- at least one conveyor unit (42) for conveying the process fluid and a reaction mixture made up of the process fluid and the particulate solid materials (12) through the receiving space (22), wherein the receiving space (22) is configured such that, when the conveyor unit (42) is activated, the process fluid and the reaction mixture flow through the first grating (28), the reaction chamber (33), and the second grating (30) when the reactor (26) is introduced into the receiving space (22).

2. The device (10) according to claim 1, **characterized in that** the receiving space (22) comprises a receiving portion (24), into which the reactor (26) can be introduced under formation of an intermediate space (58), which is closed at least in the radial direction, between the reactor (26) and the receiving portion (24).

3. The device (10) according to any of claims 1 or 2, **characterized in that**,
- in the receiving space (22), a storage container (38) is arranged for keeping the process fluid available and/or
- at least one filter unit (68) is arranged for filtering the reaction mixture.

4. The device (10) according to any of the preceding claims, **characterized in that** the device (10) comprises an ultrasonic apparatus (62) for coupling ultrasound into the reaction chamber (33).

5. The device (10) according to claims 2 and 4, **characterized in that** the ultrasonic apparatus (62) comprises a number of ultrasonic oscillators (64), which are arranged on the receiving portion (24).

6. The device (10) according to claim 5, **characterized in that** the reactor (26) comprises a number of holes (66) corresponding to the number of ultrasonic oscillators (64), which holes are arranged such that they align with the ultrasonic oscillators (64) when the reactor (26) is introduced into the receiving portion (24).

7. A rinsing device (78) for rinsing particulate solid materials (12), wherein the rinsing device (78) comprises:
- at least one reactor (26) into which the particulate solid materials (12) can be introduced, wherein the reactor (26) comprises
o a first grating (28) and
o a second grating (30), which delimit a reaction chamber (33) and retain in the reaction chamber (33) the particulate solid materials (12) that have been introduced into the reaction chamber (33), and
- at least one closeable or closed receiving space (22) into which the reactor (26) can be introduced,
- a rinsing-fluid supply line (79) for supplying a rinsing fluid into the receiving space (22),
- at least one rinsing-fluid conveyor unit (80) for conveying the rinsing fluid through the receiving space (22), wherein the receiving space (22) is configured such that, when the rinsing-fluid conveyor unit (80) is activated, the rinsing fluid flows through the first grating (28), the reaction chamber (33), and the second grating (30) when the reactor (26) is introduced into the receiving space (22).

8. The rinsing device (78) according to claim 7, **characterized in that**
- in the receiving space (22), a rinsing-fluid storage container (83) is arranged for keeping the rinsing fluid available and/or
- the rinsing device (78) comprises at least one rinsing-fluid discharge line (82) for discharging the rinsing fluid from the receiving space (22).

9. A drying device (84) for drying particulate solid materials (12), wherein the drying device (84) comprises:
- at least one reactor (26) into which the particulate solid materials (12) can be introduced, wherein the reactor (26) comprises
o a first grating (28) and
o a second grating (30), which delimit a reaction chamber (33) and retain in the reaction chamber (33) the particulate solid materials (12) that have been introduced into the reaction chamber (33), and
- at least one closeable or closed receiving space (22) into which the reactor (26) can be introduced,
- at least one suction unit (86) for conveying a drying fluid through the receiving space (22), wherein the receiving space (22) is configured such that, when the suction unit is activated, the drying fluid flows through the first grating (28), the reaction chamber (33), and the second grating (30) when the reactor (26) is introduced into the receiving space (22).

10. A system for treating particulate solid materials (12), comprising
- a first device (10₁) for treating particulate solid materials (12) according to any of claims 1 to 3,
- a second device (10₂) for treating particulate solid materials (12) according to any of claims 1 to 3,
- a first rinsing device (78₁) for rinsing the particulate solid materials (12) according to any of claims 7 or 8,
- a third device (10₃) for treating particulate solid materials (12) according to any of claims 4 to 6,
- a second rinsing device (78₂) for rinsing the particulate solid materials (12) according to any of claims 7 or 8,
- a drying device (84) for drying the particulate solid materials (12) according to claim 9, and
- a transport apparatus (34) for transporting the reactor (26) within the system.

11. A method for treating particulate solid materials (12) using a device (10) according to any of claims 1 to 6, comprising the following steps:
- introducing the particulate solid materials (12) to be treated into the reaction chamber (33),
- introducing the reactor (26) into the receiving space (22),
- supplying a process fluid into the receiving space (22), and
- conveying the process fluid and a reaction mixture made up of the process fluid and the particulate solid materials (12) through the receiving space (22) such that, when the conveyor unit (42) is activated, the process fluid and the reaction mixture flow through the first grating (28), the reaction chamber (33), and the second grating (30).

12. The method according to claim 11, comprising the following steps:
- coupling ultrasound into the reaction chamber (33) by means of the ultrasonic apparatus (62).

13. The method according to any of claims 11 or 12, comprising the following steps:
- supplying a rinsing fluid into the receiving space (22) by means of a rinsing-fluid conveyor line, and
- conveying the rinsing fluid through the receiving space (22) by means of a rinsing-fluid conveyor unit (80) such that, when the rinsing-fluid conveyor unit (80) is activated, the rinsing fluid flows through the first grating (28), the reaction chamber (33), and the second grating (30).

14. The method according to any of claims 11 to 13, comprising the following steps:
- conveying a drying fluid through the receiving space (22) by means of a suction unit, wherein the receiving space (22) is configured such that, when the suction unit is activated, the drying fluid flows through the first grating (28), the reaction chamber (33), and the second grating (30).

15. A method for treating particulate solid materials (12) using a system according to claim 10, comprising the following steps:
- introducing the reactor (26) into the receiving space (22) of the first device (10₁) for treating particulate solid materials (12) by means of the transport apparatus (34), and treating the particulate solid materials (12) using the first device (10₁),
- removing the reactor (26) from the receiving space (22) of the first device (10₁), introducing the reactor (26) into the receiving space (22) of the second device (10₂) for treating particulate solid materials (12) by means of the transport apparatus (34), and treating the particulate solid materials (12) using the second device (10₂),
- removing the reactor (26) from the receiving space (22) of the second device (10₂), introducing the reactor (26) into the receiving space (22) of the first rinsing device (78₁) for rinsing the particulate solid materials (12) by means of the transport apparatus (34), and rinsing the treated solid materials (12) using the first rinsing device (78₁),
- removing the reactor (26) from the receiving space (22) of the first rinsing device (78₁), introducing the reactor (26) into the receiving space (22) of the third device (10₃) for treating particulate solid materials (12) by means of the transport apparatus (34), and treating the particulate solid materials (12) using the third device (10), wherein ultrasound is coupled into the reaction chamber (33),
- removing the reactor (26) from the receiving space (22) of the third device (10₃), introducing the reactor (26) into the receiving space (22) of the second rinsing device (78₂) for rinsing the particulate solid materials (12) by means of the transport apparatus (34), and rinsing the treated solid materials (12) using the second rinsing device (78₂),
- removing the reactor (26) from the receiving space (22) of the second rinsing device (78₂), introducing the reactor (26) into the receiving space (22) of the drying device (84) for drying the particulate solid materials (12) by means of the transport apparatus (34), and drying the treated solid materials (12) using the drying device (84), and
- removing the reactor (26) from the receiving space (22) of the drying device (84) by means of the transport apparatus (34).

## Revendications

1. Dispositif (10) de traitement de matières solides particulaires (12), le dispositif (10) comprenant :
- au moins un réacteur (26), dans lequel les matières solides particulaires (12) peuvent être introduites, le réacteur (26) comprenant
o une première grille (28) et
o une seconde grille (30), qui délimitent un espace de réaction (33) et retiennent dans l'espace de réaction (33) les matières solides particulaires (12) qui ont été introduites dans l'espace de réaction (33), et
- au moins un espace de réception (22) pouvant être fermé ou fermé, dans lequel le réacteur (26) peut être introduit,
- une conduite d'alimentation (44) pour alimenter en fluide de traitement l'espace de réception (22),
- au moins une unité de transport (42) pour transporter le fluide de traitement ainsi qu'un mélange réactionnel constitué du fluide de traitement et des matières solides particulaires (12) à travers l'espace de réception (22), l'espace de réception (22) étant conçu de sorte que, lorsque l'unité de transport (42) est activée, le fluide de traitement et le mélange réactionnel traversent la première grille (28), l'espace de réaction (33) et la seconde grille (30) lors de l'introduction du réacteur (26) dans l'espace de réception (22).

2. Dispositif (10) selon la revendication 1, **caractérisé en ce que** l'espace de réception (22) comprend une section de réception (24) dans laquelle le réacteur (26) peut être introduit en formant un espace intermédiaire (58) fermé au moins dans la direction radiale entre le réacteur (26) et la section de réception (24).

3. Dispositif selon l'une des revendications 1 ou 2, **caractérisé en ce que** sont agencés dans l'espace de réception (22)
- un réservoir de stockage (38) pour conserver le fluide de traitement et/ou
- au moins une unité de filtration (68) pour filtrer le mélange réactionnel.

4. Dispositif (10) selon l'une des revendications précédentes, le dispositif (10) étant **caractérisé en ce qu'**il comprend un dispositif à ultrasons (62) pour injecter des ultrasons dans l'espace de réaction (33).

5. Dispositif (10) selon l'une des revendications 2 et 4, **caractérisé en ce que** le dispositif à ultrasons (62) comprend un nombre de transducteurs à ultrasons (64) qui sont agencés sur la section de réception (24).

6. Dispositif (10) selon la revendication 5, **caractérisé en ce que** le réacteur (26) comprend un nombre de passages (66) correspondant au nombre d'oscillateurs à ultrasons (64), lesquels sont agencés de manière à être alignés avec les oscillateurs à ultrasons (64) lorsque le réacteur (26) est inséré dans la section de réception (24).

7. Dispositif de rinçage (78) pour le rinçage de matières solides particulaires (12), le dispositif de rinçage (78) comprenant :
- au moins un réacteur (26), dans lequel les matières solides particulaires (12) peuvent être introduites, le réacteur (26) comprenant
o une première grille (28) et
o une seconde grille (30), qui délimitent un espace de réaction (33) et retiennent dans l'espace de réaction (33) les matières solides particulaires (12) qui ont été introduites dans l'espace de réaction (33), et
- au moins un espace de réception (22) pouvant être fermé ou fermé, dans lequel le réacteur (26) peut être introduit,
- une conduite (79) d'alimentation en fluide rinçage pour alimenter en fluide de traitement l'espace de réception (22),
- au moins une unité (80) de transport de fluide de rinçage pour transporter le fluide de rinçage à travers l'espace de réception (22), l'espace de réception (22) étant conçu de sorte que, lorsque l'unité (80) de transport de fluide de rinçage est activée, le fluide de rinçage traverse la première grille (28), l'espace de réaction (33) et la seconde grille (30) lors de l'introduction du réacteur (26) dans l'espace de réception (22).

8. Dispositif (78) selon la revendication 7, **caractérisé en ce que**
- un réservoir (83) de stockage de fluide de rinçage pour conserver le fluide de rinçage est agencé dans l'espace de réception (22) et/ou
- le dispositif de rinçage (78) comprend au moins une conduite (82) d'évacuation de fluide de rinçage pour évacuer le fluide de rinçage de l'espace de réception (22).

9. Dispositif de séchage (84) pour le séchage de matières solides particulaires (12), le dispositif de séchage (84) comprenant :
- au moins un réacteur (26), dans lequel les matières solides particulaires (12) peuvent être introduites, le réacteur (26) comprenant
o une première grille (28) et
o une seconde grille (30), qui délimitent un espace de réaction (33) et retiennent dans l'espace de réaction (33) les matières solides particulaires (12) qui ont été introduites dans l'espace de réaction (33), et
- au moins un espace de réception (22) pouvant être fermé ou fermé, dans lequel le réacteur (26) peut être introduit,
- au moins une unité d'aspiration (80) pour transporter un fluide de séchage à travers l'espace de réception (22), l'espace de réception (22) étant conçu de sorte que, lorsque l'unité d'aspiration est activée, le fluide de séchage traverse la première grille (28), l'espace de réaction (33) et la seconde grille (30) lors de l'introduction du réacteur (26) dans l'espace de réception (22).

10. Système de traitement de matières solides particulaires (12) comprenant
- un premier dispositif (10₁) de traitement de matières solides particulaires (12) selon l'une des revendications 1 à 3,
- un deuxième dispositif (10₂) de traitement de matières solides particulaires (12) selon l'une des revendications 1 à 3,
- un premier dispositif de rinçage (78₁) pour le rinçage des matières solides particulaires (12) selon l'une des revendications 7 ou 8,
- un troisième dispositif (10₃) de traitement de matières solides particulaires (12) selon l'une des revendications 4 à 6,
- un deuxième dispositif de rinçage (78₂) pour le rinçage des matières solides particulaires (12) selon l'une des revendications 7 ou 8,
- un dispositif de séchage (84) pour le séchage des matières solides particulaires (12) selon la revendication 9, ainsi que
- un dispositif de transfert (34) pour le transfert du réacteur (26) à l'intérieur du système.

11. Procédé de traitement de matières solides particulaires (12) avec un dispositif (10) selon l'une des revendications 1 à 6, comprenant les étapes suivantes :
- introduction des matières solides particulaires (12) à traiter dans l'espace de réaction (33),
- introduction du réacteur (26) dans l'espace de réception (22),
- alimentation en fluide de traitement de l'espace de réception (22), et
- transport du fluide de traitement ainsi que d'un mélange réactionnel constitué du fluide de traitement et des matières solides particulaires (12) à travers l'espace de réception (22) de sorte que le fluide de traitement et le mélange réactionnel traversent la première grille (28), l'espace de réaction (33) et la seconde grille (30) lorsque l'unité de transport (42) est activée.

12. Procédé selon la revendication 11, comprenant les étapes suivantes :
- injection d'ultrasons dans l'espace de réaction (33) au moyen du dispositif à ultrasons (62).

13. Procédé selon l'une des revendications 11 ou 12, comprenant les étapes suivantes :
- alimentation en fluide de rinçage de l'espace de réception (22) au moyen d'une conduite de transport de fluide de rinçage, et
- transport du fluide de rinçage à travers l'espace de réception (22) au moyen d'une unité (80) de transport de fluide de rinçage de sorte que le fluide de rinçage traverse la première grille (28), l'espace de réaction (33) et la seconde grille (30) lorsque l'unité (80) de transport de fluide de rinçage est activée.

14. Procédé selon l'une des revendications 11 à 13, comprenant les étapes suivantes :
- transport d'un fluide de séchage à travers l'espace de réception (22) au moyen d'une unité d'aspiration, l'espace de réception (22) étant conçu de sorte que le fluide de séchage traverse la première grille (28), l'espace de réaction (33) et la seconde grille (30) lorsque l'unité d'aspiration est activée.

15. Procédé de traitement de matières solides particulaires (12) avec un système selon la revendication 10, comprenant les étapes suivantes :
- introduction du réacteur (26), au moyen du dispositif de transfert (34), dans l'espace de réception (22) du premier dispositif (10₁) de traitement de matières solides particulaires (12), et traitement des matières solides particulaires (12) avec le premier dispositif (10₁),
- au moyen du dispositif de transfert (34), retrait du réacteur (26) de l'espace de réception (22) du premier dispositif (10₁), introduction du réacteur (26) dans l'espace de réception (22) du deuxième dispositif (10₂) pour le traitement de matières solides particulaires (12), et traitement des matières solides particulaires (12) avec le deuxième dispositif (10₂),
- au moyen du dispositif de transfert (34), retrait du réacteur (26) de l'espace de réception (22) du deuxième dispositif (10₂), introduction du réacteur (26) dans l'espace de réception (22) du premier dispositif de rinçage (78₁) pour le rinçage des matières solides particulaires (12), et rinçage des matières solides traitées (12) avec le premier dispositif de rinçage (78₁),
- au moyen du dispositif de transfert (34), retrait du réacteur (26) de l'espace de réception (22) du premier dispositif de rinçage (78₁), introduction du réacteur (26) dans l'espace de réception (22) du troisième dispositif (10₃) pour le traitement de matières solides particulaires (12), et traitement des matières solides particulaires (12) avec le troisième dispositif (10), des ultrasons étant injectés dans l'espace de réaction (33),
- au moyen du dispositif de transfert (34), retrait du réacteur (26) de l'espace de réception (22) du troisième dispositif (10₃), introduction du réacteur (26) dans l'espace de réception (22) du deuxième dispositif de rinçage (78₂) pour le rinçage des matières solides particulaires (12), et rinçage des matières solides traitées (12) avec le deuxième dispositif de rinçage (78₂),
- au moyen du dispositif de transfert (34), retrait du réacteur (26) de l'espace de réception (22) du deuxième dispositif de rinçage (78₂), introduction du réacteur (26) dans l'espace de réception (22) du dispositif de séchage (84) pour le séchage des matières solides particulaires (12), et séchage des matières solides traitées (12) avec le dispositif de séchage (84), et
- retrait du réacteur (26) de l'espace de réception (22) du dispositif de séchage (84) au moyen du dispositif de transfert (34).
